# EUROPEAN PATENT SPECIFICATION

(11) **EP 1 796 471 B1**
(45) Date of publication and mention of the grant of the patent: **31.12.2008**
(21) Application number: 05753194.9
(22) Date of filing: 21.06.2005
(51) Int. Cl.: A01N 61/00, A01N 25/04

(54) **HERBICIDAL SUSPENSION CONCENTRATE FORMULATION**
FORMULIERUNG FÜR EIN HERBIZIDES SUSPENSIONSKONZENTRAT
SUSPENSION DE CONCENTRAT DE FORMULATION HERBICIDE

(30) Priority: 02.07.2004 GB 0414895
(43) Date of publication of application: 20.06.2007
(73) Proprietor: Syngenta Limited, Guildford Surrey GU2 7YH (GB)
(72) Inventor: GRIFFITHS, Andrew John Syngenta Limited Jealott's, Bracknell Berk shire RG42 6EY (GB); SOHM, Rupert, Heinrich, Muenchwilen (CH); FORMSTONE, Carl Andrew Syngenta Limited, Bracknell Berkshire RG42 6EY (GB)
(74) Representative: Andrews, Christopher John
(86) International application number: PCT/GB2005/002443
(87) International publication number: WO 2006/003371

(56) References cited:
- EP-A- 1 156 716
- EP-A- 1 161 868
- US-B1- 6 423 667

## Description

The present invention relates to a method of improving the stability of an HPPD inhibitor in water.

The protection of crops from weeds and other vegetation that inhibits crop growth is a constantly recurring problem in agriculture. To help combat this problem, researchers in the field of synthetic chemistry have produced an extensive variety of chemicals and chemical formulations effective in the control of such unwanted growth. Chemical herbicides of many types have been disclosed in the literature and a large number are in commercial use. Commercial herbicides and some that are still in development are described in The Pesticide Manual, 12th edition, published in 2000 by the British Crop Protection Council.

Many herbicides also damage crop plants. The control of weeds in a growing crop therefore requires the use of so-called 'selective' herbicides, which are chosen to kill the weeds while leaving the crop undamaged. In practice, few herbicides are fully selective, in that they will kill all the weeds and leave the croup untouched at a particular application rate. The use of most selective herbicides is actually a balance between applying enough herbicide to acceptably control most of the weeds and causing only minimal crop damage.

One known selective herbicide is mesotrione, 2-(4-methylsulphonyl-2-nitrobenzoyl)cyclohexane-1,3-dione, an HPPD inhibitor. Mesotrione is not substantially soluble in water and has solubility of 2.2 g/l (pH 4.8), 15 g/l (pH 6.9) and 22 g/l (pH 9) all at 20°C (data taken from The Pesticide Manual, 12^{th} Edition). Mesotrione is usually formulated for sale as a concentrated suspension of solid mesotrione in water. The concentrate typically contains between 100 and 500g/l of mesotrione. This concentrate is then diluted by the end user, shortly before application, to give a final ready-to-use composition that typically comprises between 1 and 10g/l of mesotrione.

One problem with mesotrione, and other HPPD inhibitors, is that it is unstable, that is it breaks down in the presence of water. The breakdown is slow, but results in a noticeable reduction in mesotrione content when the concentrate is stored for reasonable lengths of time, particularly in warm conditions. For example, a 10% SC formulation of mesotrione, stored at 54°C for 2 weeks at pH 5 will decompose by approximately 45%.

It is therefore an object of the present invention to provide an improved aqueous pre-mix concentrate formulation comprising an HPPD inhibitor that is stable over a long period of time, particularly at a pH of greater than 3. A measure of whether a composition is stable is that there is less than 20%, suitably less than 10% decomposition in 2 years at ambient temperatures in a temperate climate.

We have surprisingly discovered that the long-term stability of an HPPD inhibitor in an aqueous environment can be improved by the addition of an electrolyte to the concentrate. This is a totally unexpected effect and allows for the storage of the HPPD inhibitor in the form of an aqueous suspension concentrate for much longer and/or under more severe conditions.

Accordingly, the present invention provides the use of an electrolyte to improve the stability of an HPPD inhibitor selected from the group consisting of isoxazoles, triketones, pyrazoles, benzobicyclon and ketospiradox in an aqueous pre-mix suspension concentrate formulation comprising:
(i) water,
(ii) the HPPD inhibitor, in suspension in the water, and
(iii) the electrolyte, in solution in the water.

Suitably, the isoxazole is a compound of formula (IA) 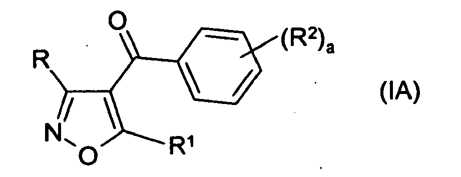
wherein R is hydrogen or -CO₂R³;
R¹ is C₁₋₄ alkyl or C₃₋₆ cycloalkyl optionally substituted by C₁₋₆ alkyl;
R² is independently selected from halogen, nitro, cyano, C₁₋₄ alkyl, C₁₋₄ haloalkyl, C₁₋₆ alkoxy, C₁₋₄ haloalkoxy, -(CR⁴R⁵)_{c}S(O)_{b}R⁶, -S(O)_{b}R⁶, -OSO₂R⁶ and -N(R⁷)SO₂R⁶; or two groups R², on adjacent carbon atoms of the phenyl ring may, together with the carbon atoms to which they are attached, form a 5- or 6-membered saturated or unsaturated heterocyclic ring containing up to three ring heteroatoms selected from nitrogen, oxygen and sulphur, which ring may be optionally substituted by one or more groups selected from halogen, nitro, C₁₋₄ alkyl, C₁₋₄ alkoxy, C₁₋₄ haloalkyl, C₁₋₄ haloalkoxy and -S(O)_{b}R⁶, it being understood that a sulphur atom, where present in the ring, may be in the form of a group -SO- or -SO₂-;
R³ is C₁₋₄ alkyl;
R⁴ and R⁵ are independently hydrogen or C₁₋₄ alkyl;
R⁶ is C₁₋₄ alkyl, or phenyl or benzyl, each of phenyl and benzyl optionally bearing from one or five substituents which may be the same of different selected from the group consisting of halogen, C₁₋₄ alkyl, C₁₋₄ alkoxy, C₁₋₄ haloalkyl, C₁₋₄ haloalkoxy, nitro and -S(O)_{b}CH₃;
R⁷ is hydrogen or C₁₋₆ alkyl;
a is an integer from one to five;
b is zero, one or two; and
c is one or two (where c is two, the groups (CR⁴R⁵) may be the same or different).

Suitably R is hydrogen; R¹ is cyclopropyl; R² is halogen (preferably chloro), -S(O)_{b}CH₃, or C₁₋₄ haloalkyl (preferably trifluoromethyl); and a is two.

Particularly preferred compounds of formula (IA) include 5-cyclopropyl-4-(2-methylsulfonyl-4-trifluoromethyl)benzoylisoxazole (isoxaflutole) and 4-(2-chloro-4-methylsulphonyl)benzoyl-5-cyclopropylisoxazole (isoxachlortole), especially isoxaflutole.

Suitably, the triketone is a compound of formula (IB), 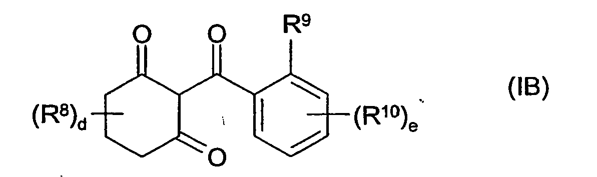
wherein each R⁸ independently represents (C₁₋₄)alkyl or -CO₂R¹¹;
R⁹ represents a halogen atom; a straight- or branched-chain alkyl or alkoxy group containing up to six carbon atoms which is optionally substituted by one or more groups -OR¹² or one or more halogen atoms; or a group selected from nitro, cyano, -CO₂R¹³, -S(O)_{f}R¹², -O(CH₂)_{g}OR¹², -COR¹³, -NR¹³R¹⁴, -SO₂NR¹³R¹⁴, -CONR¹³R¹⁴, -CSNR¹³R¹⁴ and -OSO₂R¹⁵;
each R¹⁰ independently represents halo, nitro, cyano, S(O)_{f}R¹⁶, OS(O)_{f}R¹⁶, C₁₋₆ alkyl, C₁₋₆ alkoxy, C₁₋₆ haloalkyl, C₁₋₆ haloalkoxy, carboxy, C₁₋₆ alkylcarbonyloxy, C₁₋₆ alkoxycarbonyl, C₁₋₆ alkylcarbonyl, amino, C₁₋₆ alkylamino, C₁₋₆ dialkylamino having independently the stated number of carbon atoms in each alkyl group, C₁₋₆ alkylcarbonylamino, C₁₋₆ alkoxycarbonylamino, C₁₋₆ alkylaminocarbonylamino, C₁₋₆ dialkylaminocarbonylamino having independently the stated number of carbon atoms in each alkyl group, C₁₋₆ alkoxycarbonyloxy, C₁₋₆ alkylaminocarbonyloxy, C₁₋₆ dialkylcarbonyloxy, phenylcarbonyl, substituted phenylcarbonyl, phenylcarbonyloxy, substituted phenylcarbonyloxy, phenylcarbonylamino, substituted phenylcarbonylamino, phenoxy or substituted phenoxy;
R¹¹ is C₁₋₄ alkyl;
R¹² represents a straight- or branched-chain alkyl group containing up to six carbon atoms which is optionally substituted by one or more halogen atoms;
R¹³ and R¹⁴ each independently represents a hydrogen atom; or a straight- or branched-chain alkyl group containing up to six carbon atoms which is optionally substituted by one or more halogen atoms;
R¹⁵ represents a straight-or branched-chain alkyl, alkenyl or alkynyl group containing up to six carbon atoms optionally substituted by one or more halogen atoms; or a cycloalkyl group containing from three to six carbon atoms;
R¹⁶ represents a straight or branched-chain alkyl group containing up to six carbon atoms;
d is zero or an integer from one to six;
e is zero or an integer from one to four;
f is zero, one or two; and
g is one, two or three;
with the exception of 2-(2'chloro-4'-methylsulphonylbenzoyl)-1,3-cyclohexanedione.

Suitably, R⁹ is chloro, bromo, nitro, cyano, C₁₋₄ alkyl, -CF₃, -S(O)_{f}R¹², or -OR¹²; each R¹⁰ is independently chloro, bromo, nitro, cyano, C₁₋₄ alkyl, -CF₃, -OR¹², - OS(O)_{f}R¹⁶ or -S(O)_{f}R¹⁶; d is zero and e is one or two.

Preferred compounds of formula (IB) are 2-(2'-nitro-4'-methylsulphonylbenzoyl)-1,3-cyclohexanedione (mesotrione), 2-(2'-nitro-4'-methylsulphonyloxybenzoyl)-1,3-cyclohexanedione, 4,4-dimethyl-2-(4-methanesulphonyl-2-nitrobenzoyl)-1,3-cyclohexanedione, 2-(2-chloro-3-ethoxy-4-methanesulphonylbenzoyl)-5-methyl-1,3-cyclohexanedione and 2-(2-chloro-3-ethoxy-4-ethanesulphonylbenzoyl)-5-methyl-1,3-cyclohexanedione; most preferably is 2-(2'-nitro-4'-methylsulphonyl benzoyl)-1,3-cyclohexanedione.

The compounds of formula (IB) may exist in enolic tautomeric forms that may give rise to geometric isomers. Furthermore, in certain cases, the various substituents may contribute to optical isomerism and/or stereoisomerism. All such tautomeric forms, racemic mixtures and isomers are included within the scope of the present invention.

Alternatively, the triketone is a compound of formula (IC) 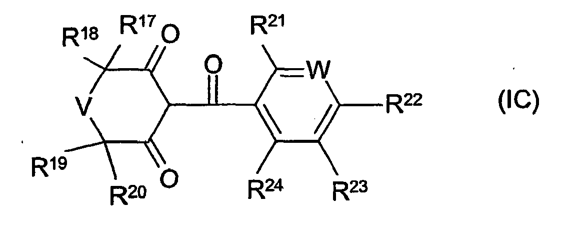
wherein V is C₁₋₂ alkylene, which may be mono- or poly-substituted by R²⁶; or, when R¹⁸ and R¹⁹ are other than C₂₋₃ alkylene, V may additionally be carbonyl, oxygen or -NR²⁷-;
W is CR²⁸ or N(O)g;
R¹⁷, R¹⁸, R¹⁹ and R²⁰ are independently hydrogen, C₁₋₄ alkyl, phenyl, C₁₋₄ alkoxy, halogen, hydroxy, cyano, hydroxycarbonyl or C₁₋₄ alkoxycarbonyl; or R¹⁸ and R¹⁹ together are C₂₋₃ alkylene, which may be mono- or poly-substituted by R²⁵;
R²¹ is hydrogen, C₁₋₆ alkyl, C₁₋₆ haloalkyl, C₂₋₆ alkenyl, C₂₋₆ haloalkenyl, C₁₋₂ alkoxycarbonyl- or phenyl-substituted vinyl, C₂₋₆ alkynyl, C₂₋₆ haloalkynyl, trimethylsilyl-, hydroxy-, C₁₋₆ alkoxy-, C alkoxycarbonyl- or phenyl-substituted ethynyl, C₃₋₆ allenyl, C₃₋₆ cycloalkyl, halo- or C₁₋₃ alkoxymethyl-substituted C₃₋₆ cycloalkyl, C₁₋₆ - alkoxy, C₃₋₆ alkenyloxy, C₃₋₆ alkynyloxy, C₁₋₆ haloalkoxy, C₃₋₆ haloalkenyloxy, cyano-C₁₋₄ alkoxy, C₁₋₄ alkoxy-C₁₋₄ alkoxy, C₁₋₄ alkylthio-C₁₋₄ alkoxy, C₁₋₄ alkylsulfinyl-C₁₋₄ - alkoxy, C₁₋₄ alkylsulfonyl-C₁₋₄ alkoxy, C₁₋₄ alkoxycarbonyl-C₁₋₄ alkoxy, C₁₋₆ alkylthio, C₁₋₆ alkylsulfinyl, C₁₋₆ alkylsulfonyl, C₁₋₆ haloalkylthio, C₁₋₆ haloalkylsulfinyl, C₁₋₆ haloalkylsulfonyl, C₁₋₄ alkoxycarbonyl-C₁₋₄ alkylthio, C₁₋₄ alkoxycarbonyl-C₁₋₄ alkylsulfinyl, C₁₋₄ alkoxycarbonyl-C₁₋₄ alkylsulfonyl, C₁₋₆ alkylamino, di(C₁₋₆ alkyl)amino, C₁₋₃ alkoxy-C₁₋₃ alkylamino, C₁₋₃ alkoxy-C₁₋₃ alkyl-N(C₁₋₃ alkyl), C₁₋₆ alkylaminosulfonyl, di(C₁₋₆-alkyl)aminosulfonyl, C₁₋₄ alkylsulfonyloxy, C₁₋₄ haloalkylsulfonyloxy, C₁₋₄ alkylsulfonylamino, C₁₋₄ alkylsulfonyl-N(C₁₋₄ alkyl), cyano, carbamoyl, C₁₋₄ alkoxycarbonyl, formyl, halogen, rhodano, amino, hydroxy-C₁₋₄ alkyl, C₁₋₄ alkoxy-C₁₋₄ alkyl, C₁₋₄ alkylthio-C₁₋₄ - alkyl, C₁₋₄ alkylsulfinyl-C₁₋₄ alkyl, C₁₋₄ alkylsulfonyl-C₁₋₄ alkyl, cyano-C₁₋₄ alkyl, C₁₋₆ - alkylcarbonyloxy-C₁₋₄ alkyl, C₁₋₄ alkoxycarbonyl-C₁₋₄ alkyl, C₁₋₄ alkoxycarbonyloxy-C₁₋₄ - alkyl, rhodano-C₁₋₄ alkyl, phenyl-C₁₋₄ alkyl, phenoxy-C₁₋₄ alkyl, benzyloxy-C₁₋₄ alkyl, benzoyloxy-C₁₋₄ alkyl, (2-oxiranyl)-C₁₋₄ alkyl, C₁₋₄ alkylamino-C₁₋₄ alkyl, di(C₁₋₄ alkyl)-amino-C₁₋₄ alkyl, C₁₋₁₂ alkylthioearbonyl-C₁₋₄ alkyl or fornlyl-C₁₋₄ alkyl, or benzylthio, benzylsulfinyl, benzylsulfonyl, benzyloxy, benzyl, phenyl, phenoxy, phenylthio, phenylsulfinyl or phenylsulfonyl, wherein the phenyl-containing groups may themselves be substituted by C₁₋₃ alkyl, C₁₋₃ haloalkyl, C₁₋₃ alkoxy, C₁₋₃ haloalkoxy, halogen, cyano or by nitro; or
R²¹ is a three- to ten-membered monocyclic or fused bicyclic ring system, which may be aromatic, saturated or partially saturated and may contain from 1 to 4 hetero atoms selected from nitrogen, oxygen and sulfur, wherein the ring system is bonded to the group W-containing aromatic ring by way of a C₁₋₄ alkylene, C₂₋₄ alkenylene or C₂₋₄ alkynylene bridge which may be interrupted by oxygen, -N(C₁₋₄ alkyl)-, sulfur, sulfinyl, sulfonyl or by carbonyl, and each ring system may contain no more than two oxygen atoms and no more than two sulfur atoms, and the ring system may itself be mono-, di- or tri-substituted by C₁₋₆ alkyl, C₁₋₆ haloalkyl, C₂₋₆ alkenyl, C₂₋₆ haloalkenyl, C₂₋₆ akynyl, C₂₋₆ haloalkynyl, C₁₋₆ alkoxy, C₁₋₆ haloalkoxy, C₃₋₆ alkenyloxy, C₃₋₆ alkynyloxy, hydroxy, mercapto, C₁₋₆ alkylthio, C₁₋₆ haloalkylthio, C₃₋₆ alkenylthio, C₃₋₆ haloalkenylthio, C₃₋₆ alkynylthio, C₁₋₄ alkoxy-C₁₋₃ alkylthio, C₁₋₄ alkylcarbonyl-C₁₋₃ alkylthio, C₁₋₄ alkoxycarbonyl-C₁₋₃ alkylthio, cyano-C₁₋₃ alkylthio, C₁₋₆ alkylsulfinyl, C₁₋₆ haloalkylsulfinyl, C₁₋₆ alkylsulfonyl, C₁₋₆ haloalkylsulfonyl, aminosulfonyl, C₁₋₄ alkylaminosulfonyl, di(C₁₋₄ alkyl)aminosulfonyl, di(C₁₋₄ alkyl)amino, halogen, cyano, nitro, phenyl and/or by benzylthio, wherein phenyl and benzylthio may themselves be substituted on the phenyl ring by C₁₋₃ alkyl, C₁₋₃ haloalkyl, C₁₋₃ alkoxy, C₁₋₃ haloalkoxy, halogen, cyano or by nitro, and wherein substituents on the nitrogen in the heterocyclic ring are other than halogen; or
R²¹ is the group -D₁-D₃ or the group -D₂-D₁-D₃;
R²² is hydrogen, C₁₋₆ alkyl, C₁₋₆ haloalkyl, C₂₋₆ alkenyl, C₂₋₆ haloalkenyl, C₂₋₆ alkynyl, C₂₋₆ haloalkynyl, C₃₋₆ cycloalkyl, C₁₋₆ alkoxy, C₁₋₆ haloalkoxy, C₁₋₆ alkylthio, C₁₋₆ alkylsulfinyl, C₁₋₆ alkylsulfonyl, C₁₋₆ haloalkylthio, C₁₋₆ haloalkylsulfinyl, C₁₋₆ haloalkylsulfonyl, C₁₋₆ alkylsulfonyloxy, hydroxy, mercapto, amino, C₁₋₆ alkylamino, di(C₁₋₆ alkyl)amino, C₁₋₄ alkylsulfonylamino, C₁₋₄ alkylsulfonyl-N(C₁₋₄ alkyl)-, C₁₋₆ alkylaminosulfonyl, di(C₁₋₆ alkyl)aminosulfonyl, cyano, halogen, C₁₋₄ alkoxy-C₁₋₄ alkyl, C₁₋₄ alkylthio-C₁₋₄ alkyl, C₁₋₄ alkylsulfinyl-C₁₋₄ alkyl, C₁₋₄ alkylsulfonyl-C₁₋₄ alkyl, triazolyl, phenyl, phenylthio, phenylsulfinyl, phenylsulfonyl or phenoxy, wherein the phenyl-containing groups may be substituted by C₁₋₃ alkyl, C₁₋₃ haloalkyl, C₁₋₃ alkoxy, C₁₋₃ haloalkoxy, halogen, cyano or by nitro;
R²³ is hydrogen, C₁₋₆ alkyl, hydroxy, C₁₋₆ alkoxy, C₁₋₆ haloalkoxy, C₃₋₆ alkenyloxy, C₃₋₆ haloalkenyloxy, C₃₋₆ alkynyloxy, C₁₋₄ alkylcarbonyloxy, C₁₋₄ alkylsulfonyloxy, phenylsulfonyloxy, C₁₋₄ alkylthio, C₁₋₄ alkylsulfinyl, C₁₋₄ alkylsulfonyl, C₁₋₄ alkylamino, di(C₁₋₄ alkyl)amino, C₁₋₄ alkoxycarbonyl, C₁₋₄ haloalkyl, formyl, cyano, halogen, phenyl or phenoxy, wherein the phenyl-containing groups may themselves be substituted by C₁₋₃ alkyl, C₁₋₃ haloalkyl, C₁₋₃ alkoxy, C₁₋₃ haloalkoxy, halogen, cyano or by nitro; or
R²³ is a three- to ten-membered monocyclic or, together with R²⁵ or R²⁷, fused bicyclic ring system, which may contain from 1 to 4 hetero atoms selected from nitrogen, oxygen and sulfur, wherein, when the ring system is not fused, it is bonded to the W-containing aromatic ring, either directly or by way of a C₁₋₄ alkylene, C₂₋₄ alkenylene or C₂₄ alkynylene bridge which may be interrupted by oxygen, -N(C₁₋₄ alkyl)-, sulfur, sulfinyl, sulfonyl or by carbonyl, and the ring system may contain no more than two oxygen atoms and no more than two sulfur atoms, and the ring system may itself be mono-, di- or tri-substituted by C₁₋₆ alkyl, C₁₋₆ haloalkyl, C₂₋₆ alkenyl, C₂₋₆ haloalkenyl, C₂₋₆ alkynyl, C₂₋₆ haloalkynyl, C₁₋₆ alkoxy, C₁₋₆ haloalkoxy, C₃₋₆ alkenyloxy, C₃₋₆ alkynyloxy, C₁₋₆ alkylthio, C₁₋₆ haloalkylthio, C₃₋₆ alkenylthio, C₃₋₆ haloalkenylthio, C₃₋₆ alkynylthio, C₁₋₄ alkoxy-C₁₋₂ alkylthio, C₁₋₄ alkylcarbonyl-C₁₋₂ alkylthio, C₁₋₄ alkoxycarbonyl-C₁₋₂ alkylthio, cyano-C₁₋₄ alkylthio, C₁₋₆ alkylsulfinyl, C₁₋₆ haloalkylsulfinyl, C₁₋₆ alkylsulfonyl, C₁₋₆ haloalkylsulfonyl, aminosulfonyl, C₁₋₄ alkylaminosulfonyl, di(C₁₋₄ alkyl)aminosulfonyl, amino, C₁₋₄ alkylamino, di(C₁₋₄ alkyl)amino, halogen, cyano, nitro, phenyl and by/or benzylthio, wherein phenyl and benzylthio may themselves be substituted on the phenyl ring by C₁₋₃ alkyl, C₁₋₃ haloalkyl, C₁₋₃ alkoxy, C₁₋₃ haloalkoxy, halogen, cyano or by nitro, and wherein substituents on the nitrogen in the heterocyclic ring are other than halogen;
R²⁴ is hydrogen, C₁₋₆ alkyl, C₁₋₆ haloalkyl, C₂₋₆ alkenyl, C₂₋₆ haloalkenyl, C₂₋₆ alkynyl, C₂₋₆ haloalkynyl, C₃₋₆ cycloalkyl, C₁₋₆ alkoxy, C₁₋₆ haloalkoxy, C₁₋₆ alkylthio, C₁₋₆ alkylsulfinyl, C₁₋₆ alkylsulfonyl, C₁₋₆ haloalkylthio, C₁₋₆ haloalkylsulfinyl, C₁₋₆ haloalkylsulfonyl, amino, C₁₋₆ alkylamino, di(C₁₋₆ alkyl)amino, C₁₋₄ alkylsulfonyl-N(C₁₋₄ alkyl)-, C₁₋₆ alkylaminosulfonyl, di(C₁₋₆ alkyl)aminosulfonyl, cyano, halogen, C₁₋₄ akoxy-C₁₋₄ alkyl, C₁₋₄ alkylthio-C₁₋₄ alkyl, C₁₋₄ alkylsulfinyl-C₁₋₄ alkyl, C₁₋₄ alkylsulfonyl-C₁₋₄ alkyl, phenyl, phenylthio, phenylsulfinyl, phenylsulfonyl or phenoxy, wherein phenyl groups may themselves be substituted by C₁₋₃ alkyl, C₁₋₃ haloalkyl, C₁₋₃ alkoxy, C₁₋₃ haloalkoxy, halogen, cyano or by nitro;
R²⁵ and R²⁶ are each independently hydrogen, C₁₋₄ alkyl, phenyl, C₁₋₄ alkoxy, halogen, hydroxy, cyano, hydroxycarbonyl or C₁₋₄ alkoxycarbonyl;
R²⁷ is C₁₋₄ alkyl, alkoxycarbonyl or C₁₋₄ alkylcarbonyl;
R²⁸ is hydrogen, C₁₋₆ alkyl, hydroxy, C₁₋₆ alkoxy, C₁₋₆ haloalkoxy, C₃₋₆ alkenyloxy, C₃₋₆ haloalkenyloxy, C₃₋₆ alkynyloxy, C₁₋₄ alkylcarbonyloxy, C₁₋₄ alkylsulfonyloxy, phenylsulfonyloxy, C₁₋₆ alkylthio, C₁₋₆ alkylsulfinyl, C₁₋₆ alkylsulfonyl, C₁₋₆ alkylamino, di(C₁₋₆ alkyl)amino, C₁₋₃ alkoxy C₁₋₃ alkylamino, C₁₋₃ alkoxy-C₁₋₃ alkyl-N(C₁₋₃ alkyl)-, C₁₋₄ alkoxycarbonyl, C₁₋₆ haloalkyl, formyl, cyano, halogen, phenyl or phenoxy, wherein the phenyl-containing groups may themselves be substituted by C₁₋₃ alkyl, C₁₋₃ haloalkyl, C₁₋₃ alkoxy, C₁₋₃ haloalkoxy, halogen, cyano or by nitro;
or R²⁸ is a three- to ten-membered monocyclic or, together with R²¹ or R²² fused bicyclic ring system, which may be interrupted once or up to three times by heterocyclic substituents selected from oxygen, sulfur, S(O), SO₂, N(R²⁹), carbonyl and C(=NOR³⁰), and wherein, when the ring system is not fused, it is bonded to the carbon atom of the substituent W, either directly or by way of a C₁₋₄ alkylene, C₂₋₄ alkenylene or C₂₋₄ alkynylene bridge which may be interrupted by oxygen, -N(C₁₋₄ alkyl)-, sulfur, sulfinyl or by sulfonyl, and the ring system may contain no more than two oxygen atoms and no more than two sulfur atoms, and the ring system may itself be mono-, di- or tri-substituted by C₁₋₆ alkyl, C₁₋₆ haloalkyl, C₂₋₆ alkenyl, C₂₋₆ haloalkenyl, C₂₋₆ alkynyl, C₂₋₆ haloalkynyl, C₁₋₆ alkoxy, C₁₋₆ haloalkoxy, C₃₋₆ alkenyloxy, C₃₋₆ alkynyloxy, C₁₋₆ alkylthio, C₁₋₆ haloalkylthio, C₃₋₆ alkenylthio, C₃₋₆ haloalkenylthio, C₃₋₆ alkynylthio, C₁₋₄ alkoxy-C₁₋₂ alkylthio, C₁₋₄ alkylcarbonyl-C₁₋₂ alkylthio, C₁₋₄ alkoxycarbonyl-C₁₋₂ alkylthio, cyano-C₁₋₄ alkylthio, C₁₋₆ alkylsulfinyl, C₁₋₆ haloalkylsulfinyl, C₁₋₆ alkylsulfonyl, C₁₋₆ haloalkylsulfonyl, aminosulfonyl, C₁₋₄ alkylaminosulfonyl, di(C₁₋₄ alkyl)aminosulfonyl, di(C₁₋₄ alkyl)amino, halogen, cyano, nitro, phenyl, benzyloxy and/or by benzylthio, and wherein the phenyl-containing groups may themselves be substituted on the phenyl ring by C₁₋₃ alkyl, C₁₋₃ haloalkyl, C₁₋₃ alkoxy, C₁₋₃ haloalkoxy, halogen, cyano or by nitro, and wherein substituents on the nitrogen in the heterocyclic ring are other than halogen;
or R²⁸ is the group -D₄-D₆ or the group D₅-D₄-D₆;
R²⁹ is hydrogen, C₁₋₄ alkyl, C₁₋₄ alkylthio-C₁₋₄ alkylcarbonyl, C₁₋₄ alkylsulfinyl-C₁₋₄ alkylcarbonyl, C₁₋₄ alkylsulfonyl-C₁₋₄ alkylcarbonyl, C₁₋₄ alkoxycarbonyl, C₁₋₄ alkylcarbonyl, phenylcarbonyl or phenyl, wherein the phenyl groups may themselves be substituted by C₁₋₄ alkyl, C₁₋₄ haloalkyl, C₁₋₄ alkoxy, C₁₋₄ haloalkoxy, C₁₋₄ alkylcarbonyl, C₁₋₄ alkoxycarbonyl, C₁₋₄ alkylamino, di(C₁₋₄ alkyl)amino, C₁₋₄ alkylthio, C₁₋₄ alkylsulfinyl, C₁₋₄ alkyl-SO₂, C₁₋₄ alkyl-S(O)₂O, C₁₋₄ haloalkylthio, C₁₋₄haloalkylsulfinyl, C₁₋₄ haloalkyl-SO₂, C₁₋₄ haloalkyl-S(O)₂O, C₁₋₄ alkyl-S(O)₂NH, C₁₋₄ alkyl-S(O)₂N(C₁₋₄ alkyl)-, halogen, nitro or by cyano;
R³⁰ is hydrogen, C¹⁻⁴ alkyl, C₃₋₄ alkenyl, C₃₋₄ alkynyl or benzyl;
h is 0 or 1;
D₁ is oxygen, -O(CO)-, -(CO)O-, -O(CO)O-, -N(C₁₋₄ alkyl)-O-, -O-N(C₁₋₄ alkyl)-, thio, sulfinyl, sulfonyl, -SO₂N(C₁₋₄ alkyl)-, -N(C₁₋₄ alkyl)SO₂-, -N(C₁₋₂ alkoxy-C₁₋₂ alkyl)SO₂- or -N(C₁₋₄ alkyl)-;
D₂ is a C₁₋₆ alkylene, C₃₋₆ alkenylene or C₃₋₆ alkynylene chain, which may be mono- or poly-substituted by halogen or by D₇, the unsaturated bonds of the chain not being bonded directly to the substituent D₁;
D₃ and D₆ are each independently of the other a C₁₋₈ alkyl, C₃₋₆ alkenyl or C₃₋₆ alkynyl group, which may be mono- or poly-substituted by halogen, hydroxy, amino, formyl, nitro, cyano, mercapto, carbamoyl, C₁₋₆ alkoxy, C₁₋₆ alkoxycarbonyl, C₂₋₆ alkenyl, C₂₋₆ haloalkenyl, C₂₋₆ alkynyl, C₂₋₆ haloalkynyl, C₃₋₆ cycloalkyl, halo-substituted C₃₋₆ cycloalkyl, C₃₋₆ alkenyloxy, C₃₋₆ alkynyloxy, C₁₋₆ haloalkoxy, C₃₋₆ haloalkenyloxy, cyano-C₁₋₆ alkoxy, C₁₋₆ alkoxy-C₁₋₆ alkoxy, C₁₋₆ alkoxy-C₁₋₆ alkoxy-C₁₋₆ alkoxy, C₁₋₆ alkylthio-C₁₋₆ alkoxy, C₁₋₆ alkylsulfinyl-C₁₋₆ alkoxy, C₁₋₆ alkylsulfonyl-C₁₋₆ alkoxy, C₁₋₆ alkoxycarbonyl-C₁₋₆ alkoxy, C₁₋₆ alkoxycarbonyl, C₁₋₆ alkylcarbonyl, C₁₋₆ alkylthio, C₁₋₆ alkylsulfinyl, C₁₋₆ alkylsulfonyl, C₁₋₆ haloalkylthio, C₁₋₆ haloalkylsulfinyl, C₁₋₆ haloalkylsulfonyl, oxiranyl which may itself be substituted by C₁₋₆ alkyl, (3-oxetanyl)-oxy which may itself be substituted by C₁₋₆ alkyl, benzyloxy, benzylthio, benzylsulfinyl, benzylsulfonyl, C₁₋₆ alkylamino, di(C₁₋₆ alkyl)amino, C₁₋₄ alkyl-S(O)₂O, di(C₁₋₄ alkyl)aminosulfonyl, rhodano, phenyl, phenoxy, phenylthio, phenylsulfinyl or by phenylsulfonyl, and wherein the phenyl- or benzyl-containing groups may themselves be substituted by one or more C₁₋₆ alkyl, C₁₋₆ haloalkyl, C₁₋₆ alkoxy, C₁₋₆ haloalkoxy, halogen, cyano, hydroxy or nitro groups; or
D₃ and D₆ are each independently of the other phenyl, which may be mono- or poly-substituted by C₁₋₆ alkyl, C₁₋₆ haloalkyl, C₁₋₆ alkoxy, C₁₋₆ haloalkoxy, halogen, cyano, hydroxy or by nitro; or
D₃ and D₆ are each independently of the other C₃₋₆ cycloalkyl, C₁₋₆ alkoxy- or C₁₋₆ alkyl-substituted C₃₋₆ cycloalkyl, 3-oxetanyl or C₁₋₆ alkyl-substituted 3-oxetanyl; or
D₃ and D₆ are each independently of the other a three- to ten-membered monocyclic or fused bicyclic ring system, which may be aromatic, saturated or partially saturated and may contain from 1 to 4 hetero atoms selected from nitrogen, oxygen and sulfur, wherein the ring system is bonded to the substituent D₁ or D₄ directly or by way of a C₁₋₄ alkylene, C₂₋₄ alkenylene, C₂₋₄ alkynylene, -N(C₁₋₄ alkyl)-C₁₋₄ alkylene, -S(O)-C₁₋₄ alkylene or -SO₂-C₁₋₄ alkylene group, and each ring system may contain no more than two oxygen atoms and no more than two sulfur atoms, and the ring system may itself be mono-, di- or tri-substituted by C₁₋₆ alkyl, C₁₋₆ haloalkyl, C₂₋₆ alkenyl, C₂₋₆ haloalkenyl, C₂₋₆ alkynyl, C₂₋₆ haloalkynyl, C₁₋₆ alkoxy, hydroxy, C₁₋₆ haloalkoxy, C₃₋₆ alkenyloxy, C₃₋₆ alkynyloxy, mercapto, C₁₋₆ alkylthio, C₁₋₆ haloalkylthio, C₃₋₆ alkenylthio, C₃₋₆ haloalkenylthio, C₃₋₆ alkynylthio, C₁₋₃ alkoxy-C₁₋₃ alkylthio, C₁₋₄ alkylcarbonyl-C₁₋₂ alkylthio, C₁₋₄ alkoxycarbonyl-C₁₋₂ alkylthio, cyano-C₁₋₃ alkylthio, C₁₋₆ alkylsulfinyl, C₁₋₆ haloalkylsulfinyl, C₁₋₆ alkylsulfonyl, C₁₋₆ haloalkylsulfonyl, aminosulfonyl, C₁₋₂ alkylaminosulfonyl, di(C₁₋₂ alkyl)aminosulfonyl, di(C₁₋₄ alkyl)amino, C₁₋₆ carbonylamino, halogen, cyano, nitro, phenyl, benzyloxy and/or by benzylthio, wherein the phenyl groups may themselves be substituted on the phenyl ring by C₁₋₃ alkyl, C₁₋₃ haloalkyl, C₁₋₃ alkoxy, C₁₋₃ haloalkoxy, halogen, cyano or by nitro, and wherein the substituents on the nitrogen in the heterocyclic ring are other than halogen;
D₄ is oxygen, -O(CO)-, -(CO)O-, -O(CO)O-, -N(C₁₋₄ alkyl)-O-, -O-N(C₁₋₄ alkyl)-, sulfur, sulfinyl, sulfonyl, -SO₂N(C₁₋₄ alkyl)-, -N(C₁₋₄ alkyl)SO₂-, -N(C₁₋₂ alkoxy-C₁₋₂ alkyl)SO₂- or -N(C₁₋₄ alkyl)-;
D₅ is a C₁₋₆ alkylene, C₃₋₆ alkenylene or C₃₋₆ alkynylene chain, which may be mono- or poly-substituted by halogen or by D₈, the unsaturated bonds of the chain not being bonded directly to the substituent D₄;
D₇ and D₈ are each independently of the other hydroxy, C₁₋₆ alkoxy, (C₃₋₆ cycloalkyl)oxy, C₁₋₆ alkoxy-C₁₋₆ alkoxy, C₁₋₆ alkoxy-C₁₋₆ alkoxy-C₁₋₆ alkoxy or C₁₋₆ alkylsulfonyloxy;
and agronomically acceptable salts/N-oxides/isomers/enantiomers of such compounds.

Alternatively, the triketone may be present in an enolic form and is a compound of formula (ID) 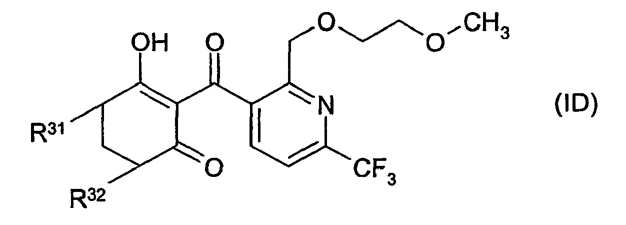 wherein R³¹ and R³² are both hydrogen or together form an ethylene bridge.

The compound of formula (ID) wherein both R³¹ and R³² are hydrogen is hereinafter referred to as compound (IDa), and the compound of formula (ID) wherein R³¹ and R³² together form an ethylene bridge is hereinafter referred to as compound (IDb).

Suitably, the pyrazole is a compound of formula (IE) 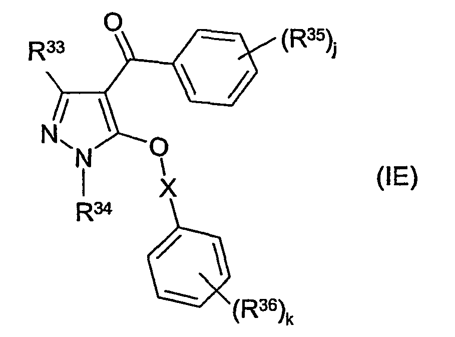
wherein R³³, R³⁴, R³⁵ and R³⁶ are each independently selected from hydrogen, halo or C₁₋₄ alkyl;
X is -SO₂- or -CH₂CO-;
j is 2 or 3; and
k is zero or 1.

Suitably R³³, R³⁴, R³⁵ and R³⁶ are each independently hydrogen, chloro or methyl.

Preferred compounds of formula (IE) include 2-[[4-(2,4-dichloro-3-methylbenzoyl)-1,3-dimethyl-1*H*-pyrazol-5-yl]oxy]-1-(4-methylphenyl)ethanone (benzofenap), (2,4-dichlorophenyl)[1,3-dimethyl-5-[[(4-methylphenyl)sulfonyl]oxy]-1*H* pyrazol-4-yl]methanone (pyrazolynate) and 2-[[4-(2,4-dichlorobenzoyl)-1,3-dimethyl-1*H*-pyrazol-5-yl]oxy]-1-phenylethanone (pyrazoxyfen).

Alternatively, the pyrazole is a compound of formula (IF) 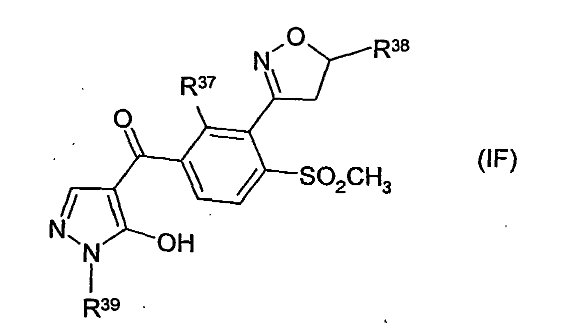 wherein R³⁷ is C₁₋₂ alkyl or chloro; R³⁸ is hydrogen or C₁₋₄ alkyl; and R³⁹ is C₁₋₄ alkyl.

Benzobicyclon is a compound of formula (IG)

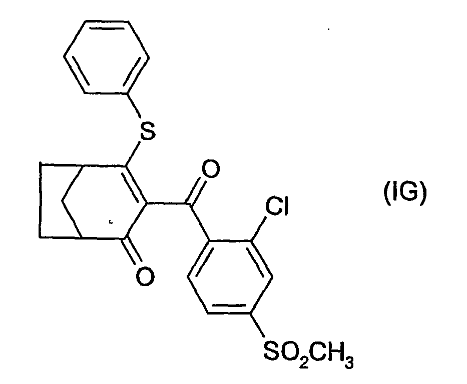

Ketospiradox is a compound of formula (IH)

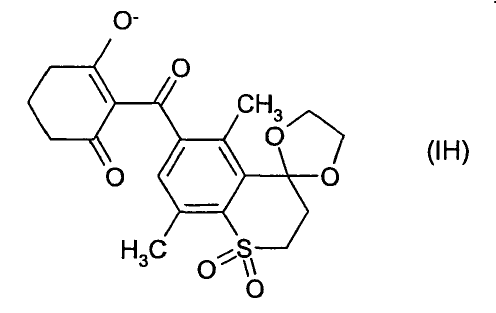

In one embodiment of the invention, the HPPD inhibitor is selected from the group consisting of benzobicyclon, benzofenap, isoxaflutole, mesotrione, pyrazolynate and pyrazoxyfen.

In a further embodiment, the HPPD inhibitor is mesotrione.

In another embodiment, the HPPD inhibitor is isoxaflutole.

By the term 'electrolyte', we mean a substance that, when dissolved in water, dissociates to ionic species. For example, the electrolyte may be selected from the group consisting of:
(a) a simple ionic compound, such as ammonium sulphate or sodium chloride; or
(b) an additional active ingredient, such as glyphosate, paraquat or diquat. The glyphosate is suitably in the form of a salt. A wide variety of glyphosate salts are known, including sodium, potassium, ammonium, and various amines, such as the isopropylamine, ethanolamine, diethanolamine and triethylamine salts. The potassium, ammonium and ethanolamine salts are preferred, particularly the potassium and ammonium salts.

Suitably, the ratio of HPPD inhibitor:electrolyte in the concentrate formulation is from 70:1 to 1:5 and preferably from 35:1 to 1:1.

Suitably, the concentrate comprises from 10 to 600g/l of HPPD inhibitor, preferably 10 to 100g/l.

Suitably, the concentrate comprises from 10 to 700 g/l of electrolyte, and preferably from 50 to 400g/l.

In addition to the HPPD inhibitor and electrolyte, a number of adjuvants may be included in the aqueous pre-mix concentrate formulation. These may include, but are not restricted to, suspending agents, surfactants, buffers, stabilisers and biocides. Adjuvants may be included in the concentrate of the invention to enhance the efficacy of the mesotrione and/or electrolyte. A broad range of surface-active agents are advantageously employed in liquid compositions, especially those designed to be diluted with carrier before application. The surface-active agents can be anionic, cationic, nonionic or polymeric in character and can be employed as emulsifying agents, wetting agents, suspending agents, or for other purposes. Typical surface active agents include salts of alkyl sulfates, such as diethanolammonium lauryl sulfate; alkylarylsulfonate salts, such as calcium dodecylbenzenesulfonate; alkylphenol-alkylene oxide addition products, such as nonylphenol-C.sub.18 ethoxylate; alcohol-alkylene oxide addition products, such as tridecyl alcohol-C.sub.16 ethoxylate; soaps, such as sodium stearate; alkylnaphthalenesulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; alkyl polyglycoside; quaternary amines, such as lauryl trimethylammonium chloride; polyethylene glycol esters of fatty acids, such as polyethylene glycol stearate; block copolymers of ethylene oxide and propylene oxide; and salts of mono and dialkyl phosphate esters.

Other adjuvants commonly utilized in agricultural compositions include crystallization inhibitors, viscosity modifiers, suspending agents, spray droplet modifiers, pigments, antioxidants, foaming agents, light-blocking agents, compatibilizing agents, antifoam agents, sequestering agents, neutralizing agents and buffers, corrosion inhibitors, dyes, odorants, spreading agents, penetration aids, micronutrients, emolients, lubricants, sticking agents, dispersing agents, thickening agents, freezing point depressants, antimicrobial agents, and the like. The compositions can also contain other compatible components, for example, other herbicides, herbicide safeners, plant growth regulants, fungicides, insecticides, and the like and can be formulated with liquid fertilizers or solid, particulate fertilizer carriers such as ammonium nitrate, urea and the like.

The aqueous pre-mix concentrate formulation of the invention can be made by preparing a HPPD inhibitor mill base and then adding the millbase and electrolyte, plus any additional adjuvants required, to water.

The aqueous pre-mix concentrate formulation may be used for the control of unwanted vegetation, particularly unwanted vegetation in a field of useful crops, such as maize, soybean, cereals, rape, sugar beet, sugar cane, plantation crops, rice and cotton. Suitably the crop is maize or soybean and preferably maize.

Crops are to be understood as including those crop which have been made tolerant to one or more herbicides or one or more classes of herbicide by conventional methods of breeding or gene technology.

A 'herbicidally effective amount' is the quantity of the ready-to-use formulation, which is capable of producing a controlling or modifying effect on the growth of plants. Typical application rates are 50 to 1500g HPPD inhibitor+electrolyte/hectare, preferably 100 to 1250g HPPD inhibitor+electrolyte/hectare.

Controlling or modifying effects include all deviation from natural development, for example, non-germination of seeds, plant death, retardation or growth, leaf burn, albinism, dwarfing and the like.

'Locus' means any part of the plants themselves, their seeds, or the ground or other medium where such plants might germinate or grow.

The ready-to-use aqueous composition may be applied by any of the usual application methods known in agriculture, most preferably by spraying.

As mentioned hereinbefore, we have discovered that it is the addition of an electrolyte to an aqueous concentrate formulation comprising an HPPD inhibitor that results in an improvement in the stability of the HPPD inhibitor, i.e. the HPPD inhibitor does not degrade as rapidly and therefore an aqueous concentrate formulation of the HPPD inhibitor can be stored for longer and/or under more severe conditions. Accordingly, the invention provides a process for improving the stability of an HPPD inhibitor in an aqueous concentrate formulation, said process comprising the addition of a HPPD inhibitor-stabilising amount of an electrolyte to said aqueous formulation. By "HPPD inhibitor-stabilising amount" we mean an amount of electrolyte that will give a stabilising effect, for example from 10 to 700g/l.

The present invention will now be illustrated by means of the following nonlimiting examples:

### Comparative Example

A 35% w/w mesotrione acid millbase was prepared, which also contained, Tween 20 (2.1% w/w), Phosphoric acid (1.9% w/w), Atlox 4913 (1.1% w/w) and tap water (to 100% w/w). This millbase was prepared using mesotrione technical (approx 80% wet paste). A typical high shear mixer and then a "bead mill" were used to mix and comminute the millbase to give an approximate mean D(4,3) particle size of 2-3 microns.

The final suspension was then prepared by combining the millbase, water and pre-prepared /pre-swollen kelzan gel (2%) (containing Proxel GXL) (0.375 g/l).

| **Constituent Name** | **g/L** |
|---|---|
| Mesotrione (as acid) | 12 |
| Tween 20 | 0.5 |
| Atlox 4913 | 0.2 |
| Phosphoric Acid | 0.05 |
| Xanthan gum | 5.0 |
| Proxel GXL | 0.375 |
| Water | To 1 litre |

### Example 1

A 35% w/w mesotrione acid millbase was prepared, which also contained, Tween 20 (2.1% w/w), Phosphoric acid (1.9% w/w), Atlox 4913 (1.1% w/w), and tap water (to 100% w/w). This millbase was prepared using mesotrione technical (approx 80% wet paste). A high shear mixer and then a bead mill were used to mix and comminute the millbase to give an approximate mean D(4,3) particle size of 2-3 microns.

The final suspension (360 g/L glyphosate, 12 g/L mesotrione) was then prepared by combining the millbase, glyphosate (using 46% w/w glyphosate acid equivalent as its potassium salt), pre-prepared/pre-swollen kelzan gel (containing Proxel GXL) and finally water. Simple mixing sufficed to give a homogeneous preparation, which can be summaried as follows:

| **Constituent Name** | **g/L** |
|---|---|
| Glyphosate (as Potassium) | 360 |
| Potassium hydroxide 100% | 134 |
| Mesotrione (as acid) | 12 |
| Tween 20 | 0.5 |
| Atlox 4913 | 0.2 |
| Phosphoric Acid | 0.05 |
| Xanthan gum | 5.0 |
| Proxel GXL | 0.375 |
| Water | To 1 litre |

### Example 2

This was prepared as in Example 1, with AL2575 (171.43 g/l) also being added, just after the glyphosate, when preparing the final product. In summary, the final preparation can be described as follows:

| **Constituent Name** | **g/L** |
|---|---|
| Glyphosate (acid equivalent) | 360 |
| Potassium hydroxide 100% | 134 |
| Mesotrione acid | 12 |
| Tween 20 | 0.5 |
| Atlox 4913 | 0.2 |
| Phosphoric acid | 0.05 |
| AL2575 | 171.43 |
| Xanthan gum | 5.0 |
| Proxel GXL | 0.375 |
| Water | To 1 litre |

### Results

Both products were tested for the chemical stability of the mesotrione in the formulation. Products were stored at 40°C to give accelerated storage data (8 weeks at 40°C is generally taken to correlate to two years at ambient temperature). The results are given in Table 1.

| Table 1 | | | | |
|---|---|---|---|---|
| Example | Initial % | 2 weeks % | 8 weeks % | Loss |
| Comparative Example | 0.9651 | <0.1 | <0.1 | >90% |
| Example 1 | 0.9676 | 0.9436 | 0.9105 | 5.90% |
| Example 2 | 0.9425 | 0.9319 | 0.7700 | 18.3% |

### Example 3

Eight aqueous millbase formulations were made comprising mesotrione millbase (12 g/L or 10,000 approximately) and varying amounts of glyphosate-potassium, ammonium sulphate, and sodium chloride. All samples were held at a pH of approximately 5 by using phosphoric acid for adjustment. The amount of mesotrione in solution was determined using UV-visible spectrophotometry, since the aqueous solubility of mesotrione is related to the expected rate of decomposition of this active ingredient in such systems. The results are shown in Table 2.

| Table 2 | | |
|---|---|---|
| Aqueous Electrolyte | Weight of electrolyte in grams per litre of formulation | Concentration of mesotrione in solution (ppm) |
| None | | 4700 |
| Potassium glyphosate | 100 | 1220 |
| | 200 | 700 |
| | 300 | 480 |
| | 360 | 290 |
| | 400 | 210 |
| | 500 | 180 |
| | 600 | 170 |
| | 640 | 160 |
| Ammonium sulphate solution | 100 | 625 |
| | 200 | 504 |
| | 300 | 391 |
| | 400 | 271 |
| | 500 | 263 |
| Sodium Chloride | 50 | 605 |
| | 105 | 549 |
| | 165 | 510 |
| | 230 | 479 |
| | 300 | 443 |

Table 2 clearly shows that the electrolyte has a strong effect on reducing the amount of dissolved mesotrione in the aqueous solution surrounding the mesotrione particles and backs up the Examples (1 and 2) as regards to reduction in chemical decomposition of mesotrione.

### Example 4

Millbase preparations of mesotrione and isoxaflutole were made using the following method:

The sample is placed in a round bottomed flask (∼140mls) and mixed at 150rpm for 15 minutes until homogeneous. An equal volume of glass beads is added to the flask (0.8 -1.0 mm diameter) and the sample is milled at 650 rpm of 60 minutes. The particle size was checked. Further milling of the sample continued (60 minutes for mesotrione and 150 minutes for isoxaflutole). The particle size was checked again and all particles met the specification of ∼ 5 microns (D(4,3) volume weighted mean diameter).

The samples were extracted under vacuum through a sieve to disengage the beads from the millbases. The two millbases shown below were checked for AI content and used in the preparation of the salt mixtures. The final mixtures (see below) were then placed on storage at -18°C (controlled initial sample) and +45°C for 8 weeks. Analysis was then carried out using validated methods. The salts used were: glyphosate potassium aqueous solution; diquat dibromide aqueous solution; paraquat dichloride aqueous solution.

| | Mass/grams | Actual | %w/w |
|---|---|---|---|
| Mesotrione | 59.47 | 49.54 | 35.22 |
| Tween 20 | 2.92 | 2.92 | 2.08 |
| Atlox 4913 | 0.47 | 0.16 | 0.11 |
| Water | 77.79 | 77.79 | 55.31 |

| | Mass/grams | Actual | %w/w |
|---|---|---|---|
| Isoxaflutole | 49.00 | 49.00 | 34.84 |
| Atlox 4894 | 0.98 | 0.98 | 0.70 |
| Atlox 4913 | 25.96 | 8.57 | 6.09 |
| Water | 64.08 | 64.08 | 45.56 |

Analytical Results: storage time was 8 weeks; sample denoted as "start" was held at -18°C for the same period.

| 1% mesotrione and glyphosate | | | pH ∼ 5 | | | | | | |
|---|---|---|---|---|---|---|---|---|---|
| | Start | 45°C | % decomposition | Start | 45°C | % decomposition | Start | 45°C | % decomposition |
| Mesotrione | 0.94 | 0.80 | 14.9 | | | | 1.05 | 0.86 | 18.1 |
| Salt %: 45.00 (as glyphosate acid equivalent) | | | | 30.00 (as glyphosate acid equivalent) | | | 15.00 (as glyphosate acid equivalent) | | |

| 1% mesotrione and diquat | | | pH ∼ 4 | | | | | | |
|---|---|---|---|---|---|---|---|---|---|
| | Start | 45°C | % decomposition | Start | 45°C | % decomposition | Start | 45°C | % decomposition |
| Mesotrione | 1.09 | 0.86 | 21.10 | 1.07 | 0.93 | 13.08 | 1.06 | 0.96 | 9.43 |
| Salt %: 22.50 (as diquat | | anion) | | 15.00 (as diquat anion) | | | 7.50 (as diquat anion) | | |

| 1 % mesotrione and paraquat | | | pH - 4 | | | | | | |
|---|---|---|---|---|---|---|---|---|---|
| | Start | 45°C | % decomposition | Start | 45°C | % decomposition | Start | 45°C | % decomposition |
| Mesotrione | 1.10 | 0.90 | 18.18 | 1.12 | 0.98 | 12.50 | 1.10 | 0.96 | 12.73 |
| Salt %: 30.00 (as paraquat anion) | | | | 20.00 (as paraquat anion) | | | 10.00 (as paraquat anion) | | |

| 1% mesotrione adjusted pH 2 (using phosphoric acid) | | | | | |
|---|---|---|---|---|---|
| | Start | 45°C | % decomposition | pH ∼2 | |
| Mesotrione | 1.07 | 0.96 | 10.28 | | |

| 1 % mesotrione not adjusted pH 5 | | | | | |
|---|---|---|---|---|---|
| | | | % decomposition | pH -4.5 | |
| Mesotrione | Start 1.27 | 45°C 0.83 | 34.65 | | |

| 1% isoxaflutole and diquat | | | pH ∼ 4 | | | | | | |
|---|---|---|---|---|---|---|---|---|---|
| | Start | 45°C | % decomposition | Start | 45°C | % decomposition | Start | 45°C | % decomposition |
| Isoxaflutole | 1.04 | 0.87 | 16.50 | 1.04 | 0.94 | 9.50 | 1.06 | 0.94 | 11.30 |
| Salt %: 22.50 (as diquat anion) | | | | 15.00 (as diquat anion) | | | 7.50 (as diquat anion) | | |

| 1 % isoxaflutole and paraquat | | | pH ∼ 4 | | | | | | |
|---|---|---|---|---|---|---|---|---|---|
| | Start | 45°C | % decomposition | Start | 45°C | % decomposition | Start | 45°C | % decomposition |
| Isoxaflutole | 0.86 | 0.80 | 7.00 | 1.02 | 0.90 | 12.00 | 1.05 | 0.99 | 6.00 |
| Salt %: 30.00 (as paraquat anion) | | | | 20.00 (as paraquat anion) | | | 10.00 (as paraquat anion) | | |

| 1% isoxaflutole unadjusted pH 7.0 | | | | |
|---|---|---|---|---|
| | Start | 45°C | % decomposition | |
| Isoxaflutole | 1.06 | 0.85 | 17.00 | |

| 1% isoxaflutole adjusted pH 2.0 | | | | |
|---|---|---|---|---|
| | Start | 45°C | % decomposition | |
| Isoxaflutole | 0.98 | 1.02 | nil | |

## Claims

1. Use of an electrolyte to improve the stability of an HPPD inhibitor selected from the group consisting of isoxazoles, triketones, pyrazoles, benzobicyclon and ketospiradox in an aqueous pre-mix suspension concentrate formulation comprising:
(i) water,
(ii) the HPPD inhibitor, in suspension in the water, and
(iii) the electrolyte, in solution in the water.

2. Use according to claim 1, wherein the isoxazole is a compound of formula (IA) 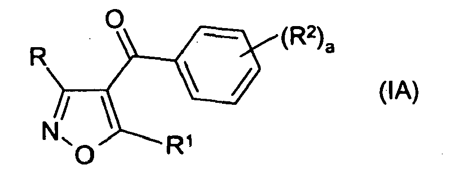
wherein R is hydrogen or -CO₂R³;
R¹ is C₁₋₄ alkyl or C₃-₆ cycloalkyl optionally substituted by C₁₋₆ alkyl;
R² is independently selected from halogen, nitro, cyano, C₁₋₄ alkyl, C₁₋₄ haloalkyl, C₁₋₆ alkoxy, C₁₋₄ haloalkoxy, -(CR⁴R⁵)_{c}S(O)_{b}R⁶, -S(O)_{b}R⁶, -OSO₂R⁶ and -N(R⁷)SO₂R⁶;
or two groups R², on adjacent carbon atoms of the phenyl ring may, together with the carbon atoms to which they are attached, form a 5- or 6-membered saturated or unsaturated heterocyclic ring containing up to three ring heteroatoms selected from nitrogen, oxygen and sulphur, which ring may be optionally substituted by one or more groups selected from halogen, nitro, C₁₋₄ alkyl, C₁₋₄ alkoxy, C₁₋₄ haloalkyl, C₁₋₄ haloalkoxy and -S(O)_{b}R⁶, it being understood that a sulphur atom, where present in the ring, may be in the form of a group -SO-or -SO₂-;
R³ is C₁₋₄ alkyl;
R⁴ and R⁵ are independently hydrogen or C₁₋₄ alkyl;
R⁶ is C₁₋₄ alkyl, or phenyl or benzyl, each of phenyl and benzyl optionally bearing from one or five substituents which may be the same of different selected from the group consisting of halogen, C₁₋₄ alkyl, C₁₄ alkoxy, C₁₄ haloallkyl, C₁₋₄ haloalkoxy, nitro and -S(O)_{b}CH₃;
R⁷ is hydrogen or C₁₋₆ alkyl;
a is an integer from one to five;
b is zero, one or two; and
c is one or two (where c is two, the groups (CR⁴R⁵) may be the same or different).

3. Use according to claim 1, wherein the triketone is a compound of formula (IB), 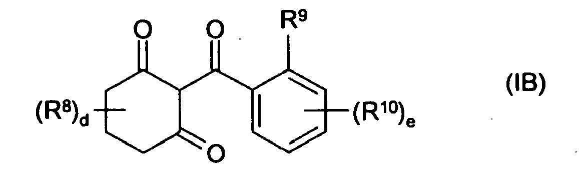
wherein each R⁸ independently represents (C₁₋₄)alkyl or -CO₂R¹¹;
R⁹ represents a halogen atom; a straight- or branched-chain alkyl or alkoxy group containing up to six carbon atoms which is optionally substituted by one or more groups -OR¹² or one or more halogen atoms; or a group selected from nitro, cyano, -CO₂R¹³, -S(O)_{f}R¹², -O(CH₂)_{g}OR¹², ₋COR^{13,} -NR¹³R¹⁴, -SO₂NR¹³R¹⁴, -CONR¹³R¹⁴, -CSNR¹³R¹⁴ and -OSO₂R¹⁵;
each R¹⁰ independently represents halo, nitro, cyano, S(O)_{f}R¹⁶, OS(O)_{f}R¹⁶, C₁₋₆ alkyl, C₁₋₆ alkoxy, C₁₋₆ haloalkyl, C₁₋₆ haloalkoxy, carboxy, C₁₋₆ alkylcarbonyloxy, C₁₋₆ alkoxycarbonyl, C₁₋₆ alkylcarbonyl, amino, C₁₋₆ alkylamino, C₁₋₆ dialkylamino having independently the stated number of carbon atoms in each alkyl group, C₁₋₆ allcylcarbonylamino, C₁₋₆ alkoxycarbonylamino, C₁₋₆ alkylaminocarbonylamino, C₁₋₆ dialkylaminocarbonylamino having independently the stated number of carbon atoms in each alkyl group, C₁₋₆ alkoxycarbonyloxy, C₁₋₆ alkylaminocarbonyloxy, C₁₋₆ dialkylcarbonyloxy, phenylcarbonyl, substituted phenylcarbonyl, phenylcarbonyloxy, substituted phenylcarbonyloxy, phenylcarbonylamino, substituted phenylcarbonylamino, phenoxy or substituted phenoxy;
R¹¹ is C₁₋₄ alkyl;
R¹² represents a straight- or branched-chain alkyl group containing up to six carbon atoms which is optionally substituted by one or more halogen atoms;
R¹³ and R¹⁴ each independently represents a hydrogen atom; or a straight- or branched-chain alkyl group containing up to six carbon atoms which is optionally substituted by one or more halogen atoms;
R¹⁵ represents a straight-or branched-chain alkyl, alkenyl or alkynyl group containing up to six carbon atoms optionally substituted by one or more halogen atoms; or a cycloalkyl group containing from three to six carbon atoms;
R¹⁶ represents a straight or branched-chain alkyl group containing up to six carbon atoms;
d is zero or an integer from one to six;
e is zero or an integer from one to four;
f is zero, one or two; and
g is one, two or three;
with the exception of 2-(2'chloro-4'-methylsulphonylbenzoyl)-1,3-cyclohexanedione.

4. Use according to claim 1, wherein the triketone is a compound of formula (IC) 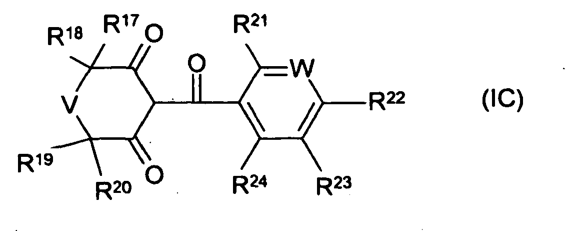
wherein V is C₁₋₂ alkylene, which may be mono- or poly-substituted by R²⁶; or, when R¹⁸ and R¹⁹ are other than C₂₋₃ alkylene, V may additionally be carbonyl, oxygen or -NR²⁷; W is CR²⁸ or N(O)g;
R¹⁷, R¹⁸, R¹⁹ and R²⁰ are independently hydrogen, C₁₋₄ alkyl, phenyl, C₁₋₄ alkoxy, halogen, hydroxy, cyano, hydroxycarbonyl or C₁₋₄ alkoxycarbonyl; or R¹⁸ and R¹⁹ together are C₂₋₃ alkylene, which may be mono- or poly-substituted by R²⁵;
R²¹ is hydrogen, C₁₋₆ alkyl, C₁₋₆ haloalkyl, C₂₋₆ alkenyl, C₂₋₆ haloalkenyl, C₁₋₂ alkoxycarbonyl- or phenyl-substituted vinyl, C₂₋₆ alkynyl, C₂₋₆ haloalkynyl, trimethylsilyl-, hydroxy-, C₁₋₆ alkoxy-, C alkoxycarbonyl- or phenyl-substituted ethynyl, C₃₋₆ allenyl, C₃₋₆ cycloalkyl, halo- or C₁₋₃ alkoxymethyl-substituted C₃₋₆ cycloalkyl, C₁₋₆ alkoxy, C₃₋₆ alkenyloxy, C₃₋₆ alkynyloxy, C₁₋₆ haloalkoxy, C₃₋₆ haloalkenyloxy, cyano-C₁₋₄ allcoxy, C₁₋₄ alkoxy-C₁₋₄ alkoxy, C₁₋₄ alkylthio-C₁₋₄ alkoxy, C₁₋₄ alkylsulfinyl-C₁₋₄ alkoxy, C₁₋₄ alkylsulfonyl-C₁₋₄ alkoxy, C₁₋₄ alkoxycarbonyl-C₁₋₄ alkoxy, C₁₋₆ alkylthio, C₁₋₆ alkylsulfinyl, C₁₋₆ alkylsulfonyl, C₁₋₆ haloalkylthio, C₁₋₆ haloalkylsulfinyl, C₁₋₆ haloalkylsulfonyl, C₁₋₄ alkoxycarbonyl-C₁₋₄ alkylthio, C₁₋₄ alkoxycarbonyl-C₁₋₄ alkylsulfinyl, C₁₋₄ alkoxycarbonyl-C₁₋₄ alkylsulfonyl, C₁₋₆ alkylamino, di(C₁₋₆alkyl)amino, C₁₋₃ alkoxy-C₁₋₃ alkylamino, C₁₋₃ alkoxy-C₁₋₃ alkyl-N(C₁₋₃ alkyl), C₁₋₆ alkylaminosulfonyl, di(C₁₋₆ alkyl)aminosulfonyl, C₁₋₄ alkylsulfonyloxy, C₁₋₄ haloalkylsulfonyloxy, C₁₋₄ alkylsulfonylamino, C₁₋₄ alkylsulfonyl-N(C₁₋₄ alkyl), cyano, carbamoyl, C₁₋₄ alkoxycarbonyl, formyl, halogen, rhodano, amino, hydroxy-C₁₋₄ alkyl, C₁₋₄ alkoxy-C₁₋₄ alkyl, C₁₋₄ alkylthio-C₁₋₄ alkyl, C₁₋₄ alkylsulfinyl-C₁₋₄ alkyl, C₁₋₄ alkylsulfonyl-C₁₋₄ alkyl, cyano-C₁₋₄ alkyl, C₁₋₆ alkylcarbonyloxy-C₁₋₄ alkyl, C₁₋₄ alkoxycarbonyl-C₁₋₄ alkyl, C₁₋₄ alkoxycarbonyloxy-C₁₋₄ alkyl, rhodano-C₁₋₄ alkyl, phenyl-C₁₋₄ alkyl, phenoxy-C₁₋₄ alkyl, benzyloxy-C₁₋₄ alkyl, benzoyloxy-C₁₋₄ alkyl, (2-oxiranyl)-C₁₋₄ alkyl, C₁₋₄ alkylarnino-C₁₋₄ alkyl, di(C₁₋₄ alkyl)amino-C₁-₄ alkyl, C₁₋₁₂ alkylthiocarbonyl-C₁₋₄ alkyl or formyl-C₁₋₄ alkyl, or benzylthio, benzylsulfinyl, benzylsulfonyl, benzyloxy, benzyl, phenyl, phenoxy, phenylthio, phenylsulfinyl or phenylsulfonyl, wherein the phenyl-containing groups may themselves be substituted by C₁₋₃ alkyl, C₁₋₃ haloalkyl, C₁₋₃ alkoxy, C₁₋₃ haloalkoxy, halogen, cyano or by nitro; or
R²¹ is a three- to ten-membered monocyclic or fused bicyclic ring system, which may be aromatic, saturated or partially saturated and may contain from 1 to 4 hetero atoms selected from nitrogen, oxygen and sulfur, wherein the ring system is bonded to the group W-containing aromatic ring by way of a C₁₋₄ alkylene, C₂₋₄ alkenylene or C₂₋₄ alkynylene bridge which may be interrupted by oxygen, -N(C₁₋₄ alkyl)-, sulfur, sulfinyl, sulfonyl or by carbonyl, and each ring system may contain no more than two oxygen atoms and no more than two sulfur atoms, and the ring system may itself be mono-, di- or tri-substituted by C₁₋₆ alkyl, C₁₋₆ haloalkyl, C₂₋₆ alkenyl, C₂₋₆ haloalkenyl, C₂₋₆ alkynyl, C₂₋₆ haloalkynyl, C₁₋₆ alkoxy, C₁₋₆ haloalkoxy, C₃₋₆-alkenyloxy, C₃₋₆ alkynyloxy, hydroxy, mercapto, C₁₋₆ alkylthio, C₁₋₆ haloalkylthio, C₃₋₆-alkenylthio, C₃₋₆ haloalkenylthio, C₃₋₆ alkynylthio, C₁₋₄ alkoxy-C ₁₋₃ alkylthio, C₁₋₄ alkylcarbonyl-C₁₋₃ alkylthio, C₁₋₄ alkoxycarbonyl-C₁₋₃ alkylthio, cyano-C₁₋₃ alkylthio, C₁₋₆ alkylsulfinyl, C₁₋₆ haloalkylsulfmyl, C₁₋₆ alkylsulfonyl, C₁₋₆ haloalkylsulfonyl, aminosulfonyl, C₁₋₄ alkylaminosulfonyl, di(C₁₋₄ allcyl)aminosulfonyl, di(C₁₋₄ allcyl)amino, halogen, cyano, nitro, phenyl and/or by benzylthio, wherein phenyl and benzylthio may themselves be substituted on the phenyl ring by C₁₋₃ alkyl, C₁₋₃ haloalkyl, C₁₋₃ alkoxy, C₁₋₃ haloalkoxy, halogen, cyano or by nitro, and wherein substituents on the nitrogen in the heterocyclic ring are other than halogen; or
R²¹ is the group -D₁-D₃ or the group -D₂-D₁-D₃;
R²² is hydrogen, C₁₋₆ alkyl, C₁₋₆ haloalkyl, C₂₋₆ alkenyl, C₂₋₆ haloalkenyl, C₂₋₆ alkynyl, C₂₋₆ haloalkynyl, C₃₋₆ cycloalkyl, C₁₋₆ alkoxy, C₁₋₆ haloalkoxy, C₁₋₆ alkylthio, C₁₋₆ alkylsulfinyl, C₁₋₆ alkylsulfonyl, C₁₋₆ haloalkylthio, C₁₋₆ haloalkylsulfinyl, C₁₋₆ haloalkylsulfonyl, C₁₋₆ alkylsulfonyloxy, hydroxy, mercapto, amino, C₁₋₆ alkylamino, di(C₁₋₆alkyl)amino, C₁₋₄-alkylsulfonylamino, C₁₋₄ alkylsulfonyl-N(C₁₋₄ allcyl)-, C₁₋₆ alkylaminosulfonyl, di(C₁₋₆ alkyl)aminosulfonyl, cyano, halogen, C₁₋₄ alkoxy-C₁₋₄ alkyl, C₁₋₄ alkylthio-C₁₋₄ alkyl, C₁₋₄ alkylsulfinyl-C₁₋₄ alkyl, C₁₋₄ alkylsulfonyl-C₁₋₄ alkyl, triazolyl, phenyl, phenylthio, phenylsulfinyl, phenylsulfonyl or phenoxy, wherein the phenyl-containing groups may be substituted by C₁₋₃ alkyl, C₁₋₃ haloalkyl, C₁₋₃ alkoxy,
C ₁₋₃ haloalkoxy, halogen, cyano or by nitro;
R²³ is hydrogen, C₁₋₆ alkyl, hydroxy, C₁₋₆ alkoxy, C₁₋₆ haloalkoxy, C₃₋₆ alkenyloxy, C₃₋₆ haloalkenyloxy, C₃₋₆ alkynyloxy, C₁₋₄ alkylcarbonyloxy, C₁₋₄ alkylsulfonyloxy, phenylsulfonyloxy, C₁₋₄ alkylthio, C₁₋₄ alkylsulfinyl, C₁₋₄ alkylsulfonyl, C₁₋₄ alkylamino, di(C₁₋₄ alkyl)amino, C₁₋₄ alkoxycarbonyl, C₁₋₄ haloalkyl, formyl, cyano, halogen, phenyl or phenoxy, wherein the phenyl-containing groups may themselves be substituted by C₁₋₃ alkyl, C₁₋₃ haloalkyl, C₁₋₃ alkoxy, C₁₋₃ haloalkoxy, halogen, cyano or by nitro; or
R²³ is a three- to ten-membered monocyclic or, together with R²⁵ or R²⁷, fused bicyclic ring system, which may contain from 1 to 4 hetero atoms selected from nitrogen, oxygen and sulfur, wherein, when the ring system is not fused, it is bonded to the W-containing aromatic ring, either directly or by way of a C₁₋₄ alkylene, C₂₋₄ alkenylene or C₂₋₄ alkynylene bridge which may be interrupted by oxygen, -N(C₁₋₄ alkyl)-, sulfur, sulfinyl, sulfonyl or by carbonyl, and the ring system may contain no more than two oxygen atoms and no more than two sulfur atoms, and the ring system may itself be mono-, di- or tri-substituted by C₁₋₆ alkyl, C₁₋₆ haloalkyl, C₂₋₆-alkenyl, C₂₋₆ haloalkenyl, C₂₋₆ alkynyl, C₂₋₆ haloalkynyl, C₁₋₆ alkoxy, C₁₋₆ haloalkoxy, C₃₋₆-alkenyloxy, C₃₋₆ alkynyloxy, C₁₋₆ alkylthio, C₁₋₆ haloalkylthio, C₃₋₆ alkenylthio, C₃₋₆ - haloalkenylthio, C₃-₆ alkynylthio, C₁₋₄ alkoxy-C₁₋₂ alkylthio, C₁₋₄ alkylcarbonyl-C₁₋₂ alkylthio, C₁₋₄ alkoxycarbonyl-C₁₋₂ alkylthio, cyano-C₁₋₄ alkylthio, C₁₋₆ alkylsulfinyl, C₁₋₆ haloalkylsulfinyl, C₁₋₆ akylsulfonyl, C₁₋₆ haloalkylsulfonyl, aminosulfonyl, C₁₋₄ alkylaminosulfonyl, di(C₁₋₄ alkyl)aminosulfonyl, amino, C₁₋₄ alkylamino, di(C₁₋₄alkyl)amino, halogen, cyano, nitro, phenyl and by/or benzylthio, wherein phenyl and benzylthio may themselves be substituted on the phenyl ring by C₁₋₃ alkyl, C₁₋₃ haloalkyl, C₁₋₃ alkoxy, C₁₋₃ haloalkoxy, halogen, cyano or by nitro, and wherein substituents on the nitrogen in the heterocyclic ring are other than halogen;
R²⁴ is hydrogen, C₁₋₆ alkyl, C₁₋₆ haloalkyl, C₂₋₆ alkenyl, C₂₋₆ haloalkenyl, C₂₋₆ alkynyl, C₂₋₆ haloalkynyl, C₃₋₆ cycloalkyl, C₁₋₆ alkoxy, C₁₋₆ haloalkoxy, C₁₋₆ alkylthio, C₁₋₆ alkylsulfinyl, C₁₋₆ alkylsulfonyl, C₁₋₆ haloalkylthio, C₁₋₆ haloalkylsulfinyl, C₁₋₆ haloalkylsulfonyl, amino, C₁₋₆ alkylamino, di(C₁₋₆ alkyl)amino, C₁₋₄ alkylsulfonyl-N(C₁₋₄ alkyl)-, C₁₋₆ alkylaminosulfonyl, di(C₁₋₆ alkyl)aminosulfonyl, cyano, halogen, C₁₋₄ alkoxy-C₁₋₄ alkyl, C₁₋₄ alkylthio-C₁₋₄ alkyl, C₁-₄ alkylsulfinyl-C₁₋₄ alkyl , C₁₋₄ alkylsulfonyl-C₁₋₄ alkyl, phenyl, phenylthio, phenylsulfinyl, phenylsulfonyl or phenoxy, wherein phenyl groups may themselves be substituted by C₁₋₃ alkyl, C₁₋₃ haloalkyl, C₁₋₃ alkoxy, C₁₋₃ haloalkoxy, halogen, cyano or by nitro;
R²⁵ and R²⁶ are each independently hydrogen, C₁₋₄ alkyl, phenyl, C₁₋₄ alkoxy, halogen, hydroxy, cyano, hydroxycarbonyl or C₁₋₄ alkoxycarbonyl;
R²⁷ is C₁₋₄ alkyl, allcoxycarbonyl or C₁₋₄ alkylcarbonyl;
R²⁸ is hydrogen, C₁₋₆ alkyl, hydroxy, C₁₋₆ alkoxy, C₁₋₆ haloalkoxy, C₃₋₆ alkenyloxy, C₃₋₆ haloalkenyloxy, C₃₋₆ alkynyloxy, C₁₋₄ allkylcarbonyloxy, C₁₋₄ alkylsulfonyloxy, phenylsulfonyloxy, C₁₋₆ allkylthio, C₁₋₆ alkylsulfinyl, C₁₋₆ allkylsulfonyl, C₁₋₆ alkylamino, di(C₁₋₆ alkyl)amino, C₁₋₃ alkoxy-C₁₋₃ alkylamino, C₁₋₃ alkoxy-C₁₋₃ alkyl-N(C₁₋₃ alkyl)-, C₁₋₄ alkoxycarbonyl, C₁₋₆ haloalkyl, formyl, cyano, halogen, phenyl or phenoxy, wherein the phenyl-containing groups may themselves be substituted by C₁₋₃ alkyl, C₁₋₃ haloalkyl, C₁₋₃ alkoxy, C₁₋₃ haloalkoxy, halogen, cyano or by nitro;
or R²⁸ is a three- to ten-membered monocyclic or, together with R²¹ or R²² fused bicyclic ring system, which may be interrupted once or up to three times by heterocyclic substituents selected from oxygen, sulfur, S(O), SO₂, N(R²⁹), carbonyl and C(=NOR³⁰), and wherein, when the ring system is not fused, it is bonded to the carbon atom of the substituent W, either directly or by way of a C₁₋₄ alkylene, C₂₋₄ alkenylene or C₂₋₄ alkynylene bridge which may be interrupted by oxygen, -N(C₁₋₄ alkyl)-, sulfur, sulfinyl or by sulfonyl, and the ring system may contain no more than two oxygen atoms and no more than two sulfur atoms, and the ring system may itself be mono-, di- or tri-substituted by C₁₋₆ alkyl, C₁₋₆ haloalkyl, C₂₋₆ alkenyl, C₂₋₆ haloalkenyl, C₂₋₆ alkynyl, C₂₋₆ haloalkynyl, C₁₋₆ alkoxy, C₁₋₆ haloalkoxy, C₃₋₆ alkenyloxy, _{C3-6} alkynyloxy, C₁₋₆ alkylthio, C₁₋₆ haloalkylthio, C₃₋₆ alkenylthio, C₃₋₆ haloalkenylthio, C₃₋₆ alkynylthio, C₁₋₄ alkoxy-C₁₋₂ alkylthio, C₁₋₄ alkylcarbonyl-C₁₋₂ alkylthio, C₁₋₄ alkoxycarbonyl-C₁₋₂ alkylthio, cyano-C₁₋₄ alkylthio, C₁₋₆ alkylsulfinyl, C₁₋₆ haloalkylsulfinyl, C₁₋₆ alkylsulfonyl, C₁₋₆ haloalkylsulfonyl, aminosulfonyl, C₁₋₄ alkylaminosulfonyl, di(C₁₋₄ alkyl)aminosulfonyl, di(C₁₋₄ alkyl)amino, halogen, cyano, nitro, phenyl, benzyloxy and/or by benzylthio, and wherein the phenyl-containing groups may themselves be substituted on the phenyl ring by C₁₋₃ alkyl, C₁₋₃ haloalkyl, C₁₋₃ alkoxy, C₁₋₃ haloalkoxy, halogen, cyano or by nitro, and wherein substituents on the nitrogen in the heterocyclic ring are other than halogen;
or R²⁸ is the group -D₄-D₆ or the group -D₅-D₄-D₆;
R²⁹ is hydrogen, C₁₋₄ alkyl, C₁₋₄ alkylthio-C₁₋₄ alkylcarbonyl, C₁₋₄ alkylsulfinyl-C₁₋₄-alkylcarbonyl, C₁₋₄ alkylsulfonyl-C₁₋₄ alkylcarbonyl, C₁₋₄ alkoxycarbonyl, C₁₋₄ alkylcarbonyl, phenylcarbonyl or phenyl, wherein the phenyl groups may themselves be substituted by C₁₋₄ alkyl, C₁₋₄ haloalkyl, C₁₋₄ alkoxy, C₁₋₄ haloalkoxy, C₁₋₄ alkylcarbonyl, C₁₋₄ alkoxycarbonyl, C₁₋₄ alkylamino, di(C₁₋₄ allcyl)amino, C₁₋₄ alkylthio, C₁₋₄ alkylsulfinyl, C₁₋₄ alkyl-SO₂, C₁₋₄ alkylS(O)₂O, C₁₋₄ haloalkylthio, C₁₋₄ haloalkylsulfinyl, C₁₋₄ haloalkyl-SO₂, C₁₋₄ haloalkyl-S(O)₂O, C₁₋₄ alkyl-S(O)₂NH, C₁₋₄ alkyl-S(O)₂N(C₁₋₄ alkyl)-, halogen, nitro or by cyano;
R³⁰ is hydrogen, C₁₋₄ alkyl, C₃₋₄ alkenyl, C₃₋₄ alkynyl or benzyl;
h is 0 or 1;
D₁ is oxygen, -O(CO)-, -(CO)O-, -O(CO)O-, -N(C₁₋₄ alkyl)-O-, -O-N(C₁₋₄ alkyl)-, thio, sulfinyl, sulfonyl, -SO₂N(C₁₋₄ alkyl)-, -N(C₁₋₄ alkyl)SO₂-, -N(C₁₋₂ alkoxy-C₁₋₂ alkyl)SO₂- or -N(C₁₋₄ alkyl)-;
D₂ is a C₁₋₆ alkylene, C₃₋₆ alkenylene or C₃₋₆ alkynylene chain, which may be mono- or poly-substituted by halogen or by D₇, the unsaturated bonds of the chain not being bonded directly to the substituent D₁;
D₃ and D₆ are each independently of the other a C₁₋₈ alkyl, C₃₋₆ alkenyl or C₃₋₆ alkynyl group, which may be mono- or poly-substituted by halogen, hydroxy, amino, formyl, nitro, cyano, mercapto, carbamoyl, C₁₋₆ alkoxy, C₁₋₆ alkoxycarbonyl, C₂₋₆ alkenyl, C₂₋₆ haloalkenyl, C₂₋₆ alkynyl, C₂₋₆ haloalkynyl, C₃₋₆ cycloalkyl, halo-substituted C₃₋₆ cycloalkyl, C₃₋₆ alkenyloxy, C₃₋₆ alkynyloxy, C₁₋₆ haloalkoxy, C₃₋₆ haloalkenyloxy, cyano-C₁₋₆ alkoxy, C₁₋₆ alkoxy-C₁₋₆ alkoxy, C₁₋₆ alkoxy-C₁₋₆ alkoxy-C₁₋₆ alkoxy, C₁₋₆ alkylthio-C₁₋₆alkoxy, C₁₋₆alkylsulfinyl-C₁₋₆ alkoxy, C₁₋₆ alkylsulfonyl-C₁₋₆ alkoxy, C₁₋₆ alkoxycarbonyl-C₁₋₆ alkoxy, C₁₋₆ alkoxycarbonyl, C₁₋₆ alkylcarbonyl, C₁₋₆ alkylthio, C₁₋₆ alkylsulfinyl, C₁₋₆ alkylsulfonyl, C₁₋₆ haloalkylthio, C₁₋₆ haloalkylsulfinyl, C₁₋₆ haloalkylsulfonyl, oxiranyl which may itself be substituted by C₁₋₆ alkyl, (3-oxetanyl)-oxy which may itself be substituted by C₁₋₆ alkyl, benzyloxy, benzylthio, benzylsulfinyl, benzylsulfonyl, C₁-₆ alkylamino, di(C₁₋₆ alkyl)amino, C₁₋₄ alkyl-S(O)₂O, di(C₁₋₄ alkyl)aminosulfonyl, rhodano, phenyl, phenoxy, phenylthio, phenylsulfinyl or by phenylsulfonyl, and wherein the phenyl- or benzyl-containing groups may themselves be substituted by one or more C₁₋₆ alkyl, C₁₋₆ haloalkyl, C₁₋₆ alkoxy, C₁₋₆ haloalkoxy, halogen, cyano, hydroxy or nitro groups; or
D₃ and D₆ are each independently of the other phenyl, which may be mono- or poly-substituted by C₁₋₆ alkyl, C₁₋₆ haloalkyl, C₁₋₆ alkoxy, C₁₋₆ haloalkoxy, halogen, cyano, hydroxy or by nitro; or
D₃ and D₆ are each independently of the other C₃₋₆ cycloalkyl, C₁₋₆ alkoxy- or C₁₋₆ alkyl-substituted C₃₋₆ cycloalkyl, 3-oxetanyl or C₁₋₆ alkyl-substituted 3-oxetanyl; or
D₃ and D₆ are each independently of the other a three- to ten-membered monocyclic or fused bicyclic ring system, which may be aromatic, saturated or partially saturated and may contain from 1 to 4 hetero atoms selected from nitrogen, oxygen and sulfur, wherein the ring system is bonded to the substituent D₁ or D₄ directly or by way of a C₁₋₄ alkylene, C₂₋₄ alkenylene, C₂₋₄ alkynylene, -N(C₁₋₄ alkyl)-C₁₋₄ alkylene, -S(O)-C₁₋₄ alkylene or -SO2-C₁₋₄ alkylene group, and each ring system may contain no more than two oxygen atoms and no more than two sulfur atoms, and the ring system may itself be mono-, di- or tri-substituted by C₁₋₆ alkyl, C₁₋₆ haloalkyl, C₂₋₆ alkenyl, C₂₋₆ haloalkenyl, C₂₋₆ alkynyl, C₂₋₆ haloalkynyl, C₁₋₆ alkoxy, hydroxy, C₁₋₆ haloalkoxy, C₃₋₆ alkenyloxy, C₃₋₆ alkynyloxy, mercapto, C₁₋₆ alkylthio, C₁₋₆ haloalkylthio, C₃₋₆ alkenylthio, C₃₋₆ haloalkenylthio, C₃₋₆ alkynylthio, C₁₋₃ alkoxy-C ₁₋₃ alkylthio, C₁₋₄ allcylcarbonyl-C₁₋₂ alkylthio, C₁₋₄ alkoxycarbonyl-C₁₋₂ alkylthio, cyano-C₁₋₃ alkylthio, C₁₋₆ alkylsulfinyl, C₁₋₆ haloalkylsulfinyl, C₁₋₆ alkylsulfonyl, C₁₋₆ haloalkylsulfonyl, aminosulfonyl, C₁₋₂ alkylaminosulfonyl, di(C₁₋₂ alkyl)aminosulfonyl, di(C₁₋₄ alkyl)amino, C₁₋₆ carbonylamino, halogen, cyano, nitro, phenyl, benzyloxy and/or by benzylthio, wherein the phenyl groups may themselves be substituted on the phenyl ring by C₁₋₃ alkyl, C₁₋₃ haloalkyl, C₁₋₃ alkoxy, C₁₋₃ haloalkoxy, halogen, cyano or by nitro, and wherein the substituents on the nitrogen in the heterocyclic ring are other than halogen;
D₄ is oxygen, -O(CO)-, -(CO)O-, -O(CO)O-, -N(C₁₋₄ alkyl)-O-, -O-N(C₁₋₄ alkyl)-, sulfur, sulfinyl, sulfonyl, -SO₂N(C₁₋₄ alkyl)-, -N(C₁₋₄ alkyl)SO₂-, -N(C₁₋₂ alkoxy-C₁₋₂ alkyl)SO₂- or -N(C₁₋₄ alkyl)-;
D₅ is a C₁₋₆ alkylene, C₃₋₆ alkenylene or C₃₋₆ alkynylene chain, which may be mono- or poly-substituted by halogen or by D₈, the unsaturated bonds of the chain not being bonded directly to the substituent D₄;
D₇ and D₈ are each independently of the other hydroxy, C₁₋₆ alkoxy, (C₃₋₆ cycloalkyl)oxy, C₁₋₆ alkoxy-C₁₋₆ alkoxy, C₁₋₆ alkoxy-C₁₋₆ alkoxy-C₁₋₆ alkoxy or C₁₋₆ alkylsulfonyloxy;
and agronomically acceptable salts/N-oxides/isomers/enantiomers of such compounds.

5. Use according to claim 1, wherein the triketone is a compound of formula (ID) 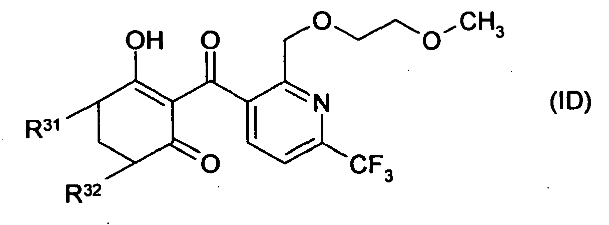 wherein R³¹ and R³² are both hydrogen or together form an ethylene bridge.

6. Use according to claim 1, wherein the pyrazole is a compound of formula (IE) 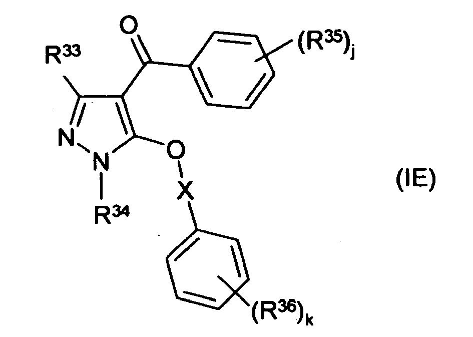
wherein R³³, R³⁴, R³⁵ and R³⁶ are each independently selected from hydrogen, halo or
C₁₋₄ alkyl;
X is -SO₂- or -CH₂CO-;
j is 2 or 3; and
k is zero or 1.

7. Use according to claim 1, wherein the pyrazole is a compound of formula (IF) 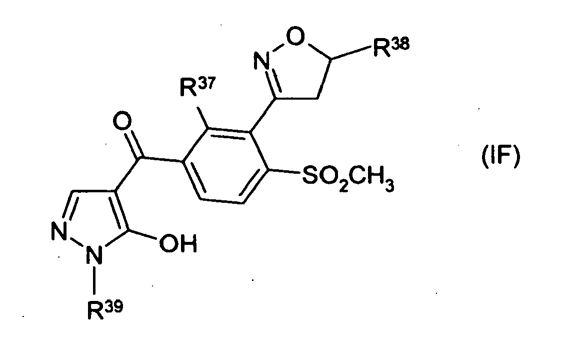 wherein R³⁷ is C₁₋₂ alkyl or chloro; R³⁸ is hydrogen or C₁₋₄ alkyl; and R³⁹ is C₁₋₄ alkyl.

8. Use according to claim 1, wherein the HPPD inhibitor is benzobicyclon.

9. Use according to claim 1, wherein the HPPD inhibitor is ketospiradox.

10. Use according to any one of claims 1 to 9, wherein the electrolyte is selected from the group consisting of a simple ionic species or an additional active ingredient.

11. Use according to any preceding claim, wherein the ratio of HPPD inhibitor to electrolyte in the formulation is from 70:1 to 1:5.

12. Use according to any preceding claim, wherein the concentration of HPPD inhibitor in the formulation is from 10 to 600g/l.

13. Use according to any preceding claim, wherein the concentration of electrolyte in the formulation is from 10 to 700 g/l.

## Patentansprüche

1. Verwendung eines Elektrolyten zur Verbesserung der Stabilität von einem HPPD-Inhibitor, ausgewählt aus der Gruppe, bestehend aus Isoxazolen, Triketonen, Pyrazolen, Benzobicyclon und Ketospiradox, in einer wässrigen Pre-mix-Suspensions-Konzentrat-Formulierung, umfassend:
(i) Wasser,
(ii) den HPPD-Inhibitor, in Suspension in dem Wasser, und
(iii) den Elektrolyten, in Lösung in dem Wasser.

2. Verwendung nach Anspruch 1, wobei das Isoxazol eine Verbindung der Formel (IA) darstellt 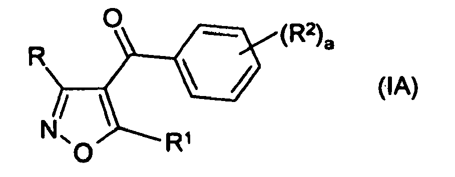
worin R Wasserstoff oder -CO₂R³ darstellt;
R¹ C₁₋₄-Alkyl oder C₃₋₆-Cycloalkyl, gegebenenfalls substituiert mit C₁₋₆-Alkyl, darstellt;
R² unabhängig aus Halogen, Nitro, Cyano, C₁₋₄-Alkyl, C₁₋₄-Halogenalkyl, C₁₋₆-Alkoxy, C₁₋₄-Halogenalkoxy, -(CR⁴R⁵)_{c}S(O)_{b}R⁶, -S(O)_{b}R⁶, -OSO₂R⁶ und -N(R⁷)SO₂R₆ ausgewählt ist;
oder zwei Gruppen R², an benachbarten Kohlenstoff-Atomen von dem Phenyl-Ring zusammen mit den Kohlenstoff-Atomen, an die sie gebunden sind, einen 5- oder 6-gliedrigen gesättigten oder ungesättigten heterocyclischen Ring bilden können, enthaltend bis zu drei Ring-Heteroatome, ausgewählt aus Stickstoff, Sauerstoff und Schwefel, wobei der Ring gegebenenfalls mit einer oder mehreren Gruppen, ausgewählt aus Halogen, Nitro, C₁₋₄-Alkyl, C₁₋₄-Alkoxy, C₁₋₄-Halogenalkyl, C₁₋₄-Halogenalkoxy und -S(O)_{b}R⁶, substituiert sein kann, wobei es verständlich ist, dass ein SchwefelAtom, falls in dem Ring vorliegend, in Form einer Gruppe -SO- oder -SO₂- vorliegen kann;
R³ C₁₋₄-Alkyl darstellt;
R⁴ und R⁵ unabhängig Wasserstoff oder C₁₋₄-Alkyl darstellen; R⁶ C₁₋₄-Alkyl, oder Phenyl oder Benzyl darstellt, wobei jedes von Phenyl und Benzyl gegebenenfalls von einem an oder fünf Substituenten, die gleich oder verschieden sein können, ausgewählt aus der Gruppe, bestehend aus Halogen, C₁₋₄-Alkyl, C₁₋₄-Alkoxy, C₁₋₄-Halogenalkyl, C₁₋₄-Halogenalkoxy, Nitro und -S(O)_{b}CH₃, trägt;
R⁷ Wasserstoff oder C₁₋₆-Alkyl darstellt;
a eine ganze Zahl von eins bis fünf ist;
b null, eins oder zwei ist; und
c eins oder zwei ist (wenn c zwei ist, können die Gruppen (CR⁴R⁵) gleich oder verschieden sein).

3. Verwendung nach Anspruch 1, wobei das Triketon eine Verbindung der Formel (IB) darstellt, 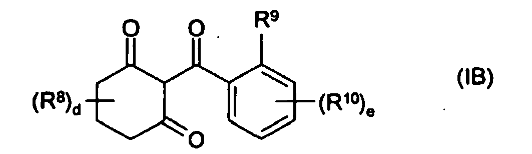
worin jedes R⁸ unabhängig (C₁₋₄)-Alkyl oder -CO₂R¹¹ wiedergibt;
R⁹ ein Halogen-Atom; eine gerad- oder verzweigt-kettige Alkyl- oder Alkoxy-Gruppe, enthaltend bis zu sechs Kohlenstoff-Atome, die gegebenenfalls mit einer oder mehreren Gruppen -OR¹² oder einem oder mehreren Halogen-Atomen substituiert ist; oder eine Gruppe, ausgewählt aus Nitro, Cyano, -CO₂R¹³, -S(O)_{f}R¹², -O(CH₂)_{g}OR¹², -COR¹³, -NR¹³R¹⁴, -SO₂NR¹³R¹⁴, -CONR¹³R¹⁴, -CSNR¹³R¹⁴ und -OSO₂R¹⁵, wiedergibt;
worin jedes R¹⁰ unabhängig Halogen, Nitro, Cyano, S(O)_{f}R¹⁶, OS(O)_{f}R¹⁶, C₁₋₆-Alkyl, C₁₋₆-Alkoxy, C₁₋₆-Halogenalkyl, C₁₋₆-Halogenalkoxy, Carboxy, C₁₋₆-Alkylcarbonyloxy, C₁₋₆-Alkoxycarbonyl, C₁₋₆-Alkylcarbonyl, Amino, C₁₋₆-Alkylamino, C₁₋₆-Dialkylamino, unabhängig mit der ausgewiesenen Anzahl an Kohlenstoff-Atomen in jeder Alkyl-Gruppe, C₁₋₆-Alkylcarbonylamino, C₁₋₆-Alkoxycarbonylamino, C₁₋₆-Alkylaminocarbonylamino, C₁₋₆-Dialkylaminocarbonylamino, unabhängig mit der ausgewiesenen Anzahl an Kohlenstoff-Atomen in jeder Alkyl-Gruppe, C₁₋₆-Alkoxycarbonyloxy, C₁₋₆-Alkylaminocarbonyloxy, C₁₋₆-Dialkylcarbonyloxy, Phenylcarbonyl, substituiertes Phenylcarbonyl, Phenylcarbonyloxy, substituiertes Phenylcarbonyloxy, Phenylcarbonylamino, substituiertes Phenylcarbonylamino, Phenoxy oder substituiertes Phenoxy wiedergibt;
R¹¹ C₁₋₄-Alkyl darstellt;
R¹² eine gerad- oder verzweigt-kettige Alkyl-Gruppe, enthaltend bis zu sechs Kohlenstoff-Atome, die gegebenenfalls mit einem oder mehreren Halogen-Atomen substituiert ist, wiedergibt;
R¹³ und R¹⁴ jeweils unabhängig ein Wasserstoff-Atom oder eine gerad- oder verzweigt-kettige Alkyl-Gruppe, enthaltend bis zu sechs Kohlenstoff-Atome, die gegebenenfalls mit einem oder mehreren Halogen-Atomen substituiert ist, wiedergeben;
R¹⁵ eine gerad- oder verzweigt-kettige Alkyl-, Alkenyl- oder Alkinyl-Gruppe, enthaltend bis zu sechs Kohlenstoff-Atome, die gegebenenfalls mit einem oder mehreren Halogen-Atomen substituiert ist, oder eine Cycloalkyl-Gruppe, enthaltend von drei bis sechs Kohlenstoff-Atome, wiedergibt;
R¹⁶ eine gerad- oder verzweigt-kettige Alkyl-Gruppe, enthaltend bis zu sechs Kohlenstoff-Atome, wiedergibt;
d null oder eine ganze Zahl von eins bis sechs ist;
e null oder eine ganze Zahl von eins bis vier ist;
f null, eins oder zwei ist; und
g eins, zwei oder drei ist;
mit der Ausnahme von 2-(2'Chlor-4'-methylsulfonyl-benzoyl)-1,3-cyclohexandion.

4. Verwendung nach Anspruch 1, wobei das Triketon eine Verbindung der Formel (IC) darstellt 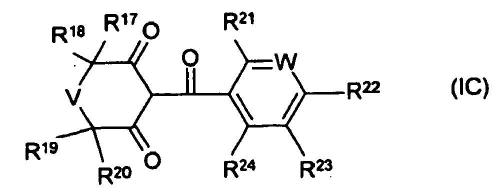
worin V C₁₋₂-Alkylen, das ein- oder mehrfach mit R²⁶ substituiert sein kann, darstellt; oder, wenn R¹⁸ und R¹⁹ von C₂₋₃-Alkylen verschieden sind, kann V zusätzlich Carbonyl, Sauerstoff oder -NR²⁷- sein;
W CR²⁸ oder N(O)g darstellt;
R¹⁷, R¹⁸, R¹⁹ und R²⁰ unabhängig Wasserstoff, C₁₋₄-Alkyl, Phenyl, C₁₋₄-Alkoxy, Halogen, Hydroxy, Cyano, Hydroxycarbonyl oder C₁₋₄-Alkoxycarbonyl darstellen; oder R¹⁸ und R¹⁹ zusammen C₂₋₃-Alkylen, das ein- oder mehrfach mit R²⁵ substituiert sein kann, darstellen;
R²¹ Wasserstoff, C₁₋₆-Alkyl, C₁₋₆-Halogenalkyl, C₂₋₆-Alkenyl, C₂₋₆-Halogenalkenyl, C₁₋₂-Alkoxycarbonyl- oder Phenyl-substituiertes Vinyl, C₂₋₆-Alkinyl, C₂₋₆-Halogenalkinyl, Trimethylsilyl-, Hydroxy-, C₁₋₆-Alkoxy-, C Alkoxycarbonyl- oder Phenyl-substituiertes Ethinyl, C₃₋₆-Allenyl, C₃₋₆-Cycloalkyl, Halogen- oder C₁₋₃-Alkoxymethyl-substituiertes C₃₋₆-Cycloalkyl, C₁₋₆-Alkoxy, C₃₋₆-Alkenyloxy, C₃₋₆-Alkinyloxy, C₁₋₆-Halogenalkoxy, C₃₋₆-Halogenalkenyloxy, Cyano-C₁₋₄-alkoxy, C₁₋₄-Alkoxy-C₁₋₄-alkoxy, C₁₋₄-Alkylthio-C₁₋₄-alkoxy, C₁₋₄-Alkylsulfinyl-C₁₋₄-alkoxy, C₁₋₄-Alkylsulfonyl-C₁₋₄-alkoxy, C₁₋₄-Alkoxycarbonyl-C₁₋₄-alkoxy, C₁₋₆-Alkylthio, C₁₋₆-Alkylsulfinyl, C₁₋₆-Alkylsulfonyl, C₁₋₆-Halogenalkylthio, C₁₋₆-Halogen-alkylsulfinyl, C₁₋₆-Halogen-alkylsulfonyl, C₁₋₄-Alkoxycarbonyl-C₁₋₄-alkylthio, C₁₋₄-Alkoxycarbonyl-C₁₋₄-alkylsulfinyl, C₁₋₄-Alkoxycarbonyl-C₁₋₄-alkylsulfonyl, C₁₋₆-Alkylamino, Di-(C₁₋₆-alkyl)-amino, C₁₋₃-Alkoxy-C₁₋₃-alkylamino, C₁₋₃-Alkoxy-C₁₋₃-alkyl-N-(C₁₋₃-alkyl), C₁₋₆-Alkylaminosulfonyl, Di-(C₁₋₆-alkyl)-aminosulfonyl, C₁₋₄-Alkylsulfonyloxy, C₁₋₄-Halogen-alkylsulfonyloxy, C₁₋₄-Alkylsulfonyl-amino, C₁₋₄-Alkylsulfonyl-N-(C₁₋₄-alkyl), Cyano, Carbamoyl, C₁₋₄-Alkoxycarbonyl, Formyl, Halogen, Rhodano, Amino, Hydroxy-C₁₋₄-alkyl, C₁₋₄-Alkoxy-C₁₋₄-alkyl, C₁₋₄-Alkylthio-C₁₋₄-alkyl, C₁₋₄-Alkylsulfinyl-C₁₋₄-alkyl, C₁₋₄-Alkylsulfonyl-C₁₋₄-alkyl, Cyano-C₁₋₄-alkyl, C₁₋₆-Alkylcarbonyloxy-C₁₋₄-alkyl, C₁₋₄-Alkoxycarbonyl-C₁₋₄-alkyl, C₁₋₄-Alkoxycarbonyloxy-C₁₋₄-alkyl, Rhodano-C₁₋₄-alkyl, Phenyl-C₁₋₄-alkyl, Phenoxy-C₁₋₄-alkyl, Benzyloxy-C₁₋₄-alkyl, Benzoyloxy-C₁₋₄-alkyl, (2-Oxiranyl)-C₁₋₄-alkyl, C₁₋₄-Alkylamino-C₁₋₄-alkyl, Di-(C₁₋₄-alkyl)-amino-C₁₋₄-alkyl, C₁₋₁₂-Alkylthiocarbonyl-C₁₋₄-alkyl oder Formyl-C₁₋₄-alkyl, oder Benzylthio, Benzylsulfinyl, Benzylsulfonyl, Benzyloxy, Benzyl, Phenyl, Phenoxy, Phenylthio, Phenylsulfinyl oder Phenylsulfonyl, wobei die Phenyl-enthaltenden Gruppen selbst mit C₁₋₃-Alkyl, C₁₋₃-Halogenalkyl, C₁₋₃-Alkoxy, C₁₋₃-Halogenalkoxy, Halogen, Cyano oder mit Nitro substituiert sein können, darstellt; oder
R²¹ ein drei- bis zehn-gliedriges monocyclisches oder kondensiertes bicyclisches Ringsystem darstellt, das aromatisch, gesättigt oder teilweise gesättigt sein kann und von 1 bis 4 Heteroatome, ausgewählt aus Stickstoff, Sauerstoff und Schwefel, enthalten kann, wobei das Ringsystem an den die Gruppe W enthaltenden aromatischen Ring mit Hilfe einer C₁₋₄-Alkylen-, C₂₋₄-Alkenylen- oder C₂₋₄-Alkinylen-Brücke, die unterbrochen sein kann durch Sauerstoff, -N(C₁₋₄-Alkyl)-, Schwefel, Sulfinyl, Sulfonyl oder durch Carbonyl, gebunden ist und jedes Ringsystem nicht mehr als zwei Sauerstoff-Atome und nicht mehr als zwei Schwefel-Atome enthalten kann, und das Ringsystem selbst ein-, zwei- oder dreifach mit C₁₋₆-Alkyl, C₁₋₆-Halogenalkyl, C₂₋₆-Alkenyl, C₂₋₆-Halogenalkenyl, C₂₋₆-Alkinyl, C₂₋₆-Halogenalkinyl, C₁₋₆-Alkoxy, C₁₋₆-Halogenalkoxy, C₃₋₆-Alkenyloxy, C₃₋₆-Alkinyloxy, Hydroxy, Mercapto, C₁₋₆-Alkylthio, C₁₋₆-Halogenalkylthio, C₃₋₆-Alkenylthio, C₃₋₆-Halogenalkenylthio, C₃₋₆-Alkinylthio, C₁₋₄-Alkoxy-C₁₋₃-alkylthio, C₁₋₄-Alkylcarbonyl-C₁₋₃-alkylthio, C₁₋₄-Alkoxycarbonyl-C₁₋₃-alkylthio, Cyano-C₁₋₃-alkylthio, C₁₋₆-Alkylsulfinyl, C₁₋₆-Halogen-alkylsulfinyl, C₁₋₆-Alkylsulfonyl, C₁₋₆-Halogen-alkylsulfonyl, Aminosulfonyl, C₁₋₄-Alkylaminosulfonyl, Di-(C₁₋₄-alkyl)-aminosulfonyl, Di-(C₁₋₄-alkyl)-amino, Halogen, Cyano, Nitro, Phenyl und/oder mit Benzylthio substituiert sein kann, wobei Phenyl und Benzylthio selbst an dem Phenyl-Ring mit C₁₋₃-Alkyl, C₁₋₃-Halogenalkyl, C₁₋₃-Alkoxy, C₁₋₃-Halogenalkoxy, Halogen, Cyano oder mit Nitro substituiert sein können, und wobei die Substituenten an dem Stickstoff in dem heterocyclischen Ring von Halogen verschieden sind, darstellt; oder
R²¹ die Gruppe -D₁-D₃ oder die Gruppe -D₂-D₁-D₃ darstellt;
R²² Wasserstoff, C₁₋₆-Alkyl, C₁₋₆-Halogenalkyl, C₂₋₆-Alkenyl, C₂₋₆-Halogenalkenyl, C₂₋₆-Alkinyl, C₂₋₆-Halogenalkinyl, C₃₋₆-Cycloalkyl, C₁₋₆-Alkoxy, C₁₋₆-Halogenalkoxy, C₁₋₆-Alkylthio, C₁₋₆-Alkylsulfinyl, C₁₋₆-Alkylsulfonyl, C₁₋₆-Halogen-alkylthio, C₁₋₆-Halogen-alkylsulfinyl, C₁₋₆-Halogen-alkylsulfonyl, C₁₋₆-Alkylsulfonyloxy, Hydroxy, Mercapto, Amino, C₁₋₆-Alkylamino, Di-(C₁₋₆-alkyl)-amino, C₁₋₄-Alkylsulfonylamino, C₁₋₄-Alkylsulfonyl-N-(C₁₋₄-alkyl)-, C₁₋₆-Alkylaminosulfonyl, Di-(C₁₋₆-alkyl)-aminosulfonyl, Cyano, Halogen, C₁₋₄-Alkoxy-C₁₋₄-alkyl, C₁₋₄-Alkylthio-C₁₋₄-alkyl, C₁₋₄-Alkylsulfinyl-C₁₋₄-alkyl, C₁₋₄-Alkylsulfonyl-C₁₋₄-alkyl, Triazolyl, Phenyl, Phenylthio, Phenylsulfinyl, Phenylsulfonyl oder Phenoxy, worin die Phenyl-enthaltenden Gruppen mit C₁₋₃-Alkyl, C₁₋₃-Halogenalkyl, C₁₋₃-Alkoxy, C₁₋₃-Halogenalkoxy, Halogen, Cyano oder mit Nitro substituiert sein können, darstellt;
R²³ Wasserstoff, C₁₋₆-Alkyl, Hydroxy, C₁₋₆-Alkoxy, C₁₋₆-Halogenalkoxy, C₃₋₆-Alkenyloxy, C₃₋₆-Halogen-alkenyloxy, C₃₋₆-Alkinyloxy, C₁₋₄-Alkylcarbonyloxy, C₁₋₄-Alkylsulfonyloxy, Phenylsulfonyloxy, C₁₋₄-Alkylthio, C₁₋₄-Alkylsulfinyl, C₁₋₄-Alkylsulfonyl, C₁₋₄-Alkylamino, Di-(C₁₋₄-alkyl)-amino, C₁₋₄-Alkoxycarbonyl, C₁₋₄-Halogenalkyl, Formyl, Cyano, Halogen, Phenyl oder Phenoxy, wobei die Phenyl-enthaltenden Gruppen selbst mit C₁₋₃-Alkyl, C₁₋₃-Halogenalkyl, C₁₋₃-Alkoxy, C₁₋₃-Halogenalkoxy, Halogen, Cyano oder mit Nitro substituiert sein können, darstellt; oder
R²³ ein drei- bis zehn-gliedriges monocyclisches oder, zusammen mit R²⁵ oder R²⁷, kondensiertes bicyclisches Ringsystem, das von 1 bis 4 Heteroatome, ausgewählt aus Stickstoff, Sauerstoff und Schwefel, enthalten kann, wobei, wenn das Ringsystem nicht kondensiert ist, es an den W enthaltenden aromatischen Ring, entweder direkt oder mit Hilfe einer C₁₋₄-Alkylen-, C₂₋₄-Alkenylen- oder C₂₋₄-Alkinylen-Brücke, die unterbrochen sein kann durch Sauerstoff, -N(C₁₋₄-Alkyl)-, Schwefel, Sulfinyl, Sulfonyl oder durch Carbonyl, gebunden ist und das Ringsystem nicht mehr als zwei Sauerstoff-Atome und nicht mehr als zwei Schwefel-Atome enthalten kann, und das Ringsystem selbst ein-, zwei- oder dreifach mit C₁₋₆-Alkyl, C₁₋₆-Halogenalkyl, C₂₋₆-Alkenyl, C₂₋₆-Halogenalkenyl, C₂₋₆-Alkinyl, C₂₋₆-Halogenalkinyl, C₁₋₆-Alkoxy, C₁₋₆-Halogenalkoxy, C₃₋₆-Alkenyloxy, C₃₋₆-Alkinyloxy, C₁₋₆-Alkylthio, C₁₋₆-Halogenalkylthio, C₃₋₆-Alkenylthio, C₃₋₆-Halogenalkenylthio, C₃₋₆-Alkinylthio, C₁₋₄-Alkoxy-C₁₋₂-alkylthio, C₁₋₄-Alkylcarbonyl-C₁₋₂-alkylthio, C₁₋₄-Alkoxycarbonyl-C₁₋₂-alkylthio, Cyano-C₁₋₄-alkylthio, C₁₋₆-Alkylsulfinyl, C₁₋₆-Halogenalkylsulfinyl, C₁₋₆-Alkylsulfonyl, C₁₋₆-Halogenalkylsulfonyl, Aminosulfonyl, C₁₋₄-Alkyl-aminosulfonyl, Di-(C₁₋₄-alkyl)-aminosulfonyl, Amino, C₁₋₄-Alkylamino, Di-(C₁₋₄-alkyl)-amino, Halogen, Cyano, Nitro, Phenyl und/oder mit Benzylthio substituiert ist, wobei Phenyl und Benzylthio selbst an dem Phenyl-Ring mit C₁₋₃-Alkyl, C₁₋₃-Halogenalkyl, C₁₋₃-Alkoxy, C₁₋₃-Halogenalkoxy, Halogen, Cyano oder mit Nitro substituiert sein können, und wobei die Substituenten an dem Stickstoff in dem heterocyclischen Ring von Halogen verschieden sind, darstellt;
R²⁴ Wasserstoff, C₁₋₆-Alkyl, C₁₋₆-Halogenalkyl, C₂₋₆-Alkenyl, C₂₋₆-Halogenalkenyl, C₂₋₆-Alkinyl, C₂₋₆-Halogenalkinyl, C₃₋₆-Cycloalkyl, C₁₋₆-Alkoxy, C₁₋₆-Halogenalkoxy, C₁₋₆-Alkylthio, C₁₋₆-Alkylsulfinyl, C₁₋₆-Alkylsulfonyl, C₁₋₆-Halogenalkylthio, C₁₋₆-Halogen-alkylsulfinyl, C₁₋₆-Halogen-alkylsulfonyl, Amino, C₁₋₆-Alkylamino, Di-(C₁₋₆-alkyl)-amino, C₁₋₄-Alkylsulfonyl-N-(C₁₋₄-alkyl)-, C₁₋₆-Alkylaminosulfonyl, Di-(C₁₋₆-alkyl)-aminosulfonyl, Cyano, Halogen, C₁₋₄-Alkoxy-C₁₋₄-alkyl, C₁₋₄-Alkylthio-C₁₋₄-alkyl, C₁₋₄-Alkylsulfinyl-C₁₋₄-alkyl, C₁₋₄-Alkylsulfonyl-C₁₋₄-alkyl, Phenyl, Phenylthio, Phenylsulfinyl, Phenylsulfonyl oder Phenoxy, wobei die Phenyl-Gruppen selbst mit C₁₋₃-Alkyl, C₁₋₃-Halogenalkyl, C₁₋₃-Alkoxy, C₁₋₃-Halogenalkoxy, Halogen, Cyano oder mit Nitro substituiert sein können, darstellt;
R²⁵ und R²⁶ jeweils unabhängig Wasserstoff, C₁₋₄-Alkyl, Phenyl, C₁₋₄-Alkoxy, Halogen, Hydroxy, Cyano, Hydroxycarbonyl oder C₁₋₄-Alkoxycarbonyl darstellen;
R²⁷ C₁₋₄-Alkyl, Alkoxycarbonyl oder C₁₋₄-Alkylcarbonyl darstellt;
R²⁸ Wasserstoff, C₁₋₆-Alkyl, Hydroxy, C₁₋₆-Alkoxy, C₁₋₆-Halogenalkoxy, C₃₋₆-Alkenyloxy, C₃₋₆-Halogenalkenyloxy, C₃₋₆-Alkinyloxy, C₁₋₄-Alkylcarbonyloxy, C₁₋₄-Alkylsulfonyloxy, Phenylsulfonyloxy, C₁₋₆-Alkylthio, C₁₋₆-Alkylsulfinyl, C₁₋₆-Alkylsulfonyl, C₁₋₆-Alkylamino, Di-(C₁₋₆-alkyl)-amino, C₁₋₃-Alkoxy-C₁₋₃-alkylamino, C₁₋₃-Alkoxy-C₁₋₃-alkyl-N-(C₁₋₃-alkyl)-, C₁₋₄-Alkoxycarbonyl, C₁₋₆-Halogenalkyl, Formyl, Cyano, Halogen, Phenyl oder Phenoxy, wobei die Phenyl-enthaltenden Gruppen selbst mit C₁₋₃-Alkyl, C₁₋₃-Halogenalkyl, C₁₋₃-Alkoxy, C₁₋₃-Halogenalkoxy, Halogen, Cyano oder mit Nitro substituiert sein können, darstellt; oder
R²⁸ ein drei- bis zehn-gliedriges monocyclisches oder, zusammen mit R²¹ oder R²² kondensiertes bicyclisches Ringsystem darstellt, das einmal oder bis zu dreimal unterbrochen sein kann mit heterocyclischen Substituenten, ausgewählt aus Sauerstoff, Schwefel, S(O), SO₂, N(R²⁹), Carbonyl und C(=NOR³⁰), und wobei, wenn das Ringsystem nicht kondensiert ist, es an das Kohlenstoff-Atom von dem Substituenten W, entweder direkt oder mit Hilfe einer C₁₋₄-Alkylen-, C₂₋₄-Alkenylen- oder C₂₋₄-Alkinylen-Brücke, die unterbrochen sein kann durch Sauerstoff, -N(C₁₋₄-Alkyl)-, Schwefel, Sulfinyl oder durch Sulfonyl, gebunden ist, und das Ringsystem nicht mehr als zwei Sauerstoff-Atome und nicht mehr als zwei Schwefel-Atome enthalten kann, und das Ringsystem selbst ein-, zwei- oder dreifach mit C₁₋₆-Alkyl, C₁₋₆-Halogenalkyl, C₂₋₆-Alkenyl, C₂₋₆-Halogenalkenyl, C₂₋₆-Alkinyl, C₂₋₆-Halogenalkinyl, C₁₋₆-Alkoxy, C₁₋₆-Halogenalkoxy, C₃₋₆-Alkenyloxy, C₃₋₆-Alkinyloxy, C₁₋₆-Alkylthio, C₁₋₆-Halogenalkylthio, C₃₋₆-Alkenylthio, C₃₋₆-Halogenalkenylthio, C₃₋₆-Alkinylthio, C₁₋₄-Alkoxy-C₁₋₂-alkylthio, C₁₋₄-Alkylcarbonyl-C₁₋₂-alkylthio, C₁₋₄-Alkoxycarbonyl-C₁₋₂-alkylthio, Cyano-C₁₋₄-alkylthio, C₁₋₆-Alkylsulfinyl, C₁₋₆-Halogenalkylsulfinyl, C₁₋₆-Alkylsulfonyl, C₁₋₆-Halogenalkylsulfonyl, Aminosulfonyl, C₁₋₄-Alkylaminosulfonyl, Di-(C₁₋₄-alkyl)-aminosulfonyl, Di-(C₁₋₄-alkyl)-amino, Halogen, Cyano, Nitro, Phenyl, Benzyloxy und/oder mit Benzylthio substituiert sein kann, und wobei die Phenyl-enthaltenden Gruppen selbst an dem Phenyl-Ring mit C₁₋₃-Alkyl, C₁₋₃-Halogenalkyl, C₁₋₃-Alkoxy, C₁₋₃-Halogenalkoxy, Halogen, Cyano oder mit Nitro substituiert sein können, und wobei die Substituenten an dem Stickstoff in dem heterocyclischen Ring von Halogen verschieden sind;
oder R²⁸ die Gruppe -D₄-D₆ oder die Gruppe -D₅-D₄-D₆ darstellt;
R²⁹ Wasserstoff, C₁₋₄-Alkyl, C₁₋₄-Alkylthio-C₁₋₄-alkylcarbonyl, C₁₋₄-Alkylsulfinyl-C₁₋₄-alkylcarbonyl, C₁₋₄-Alkylsulfonyl-C₁₋₄-alkylcarbonyl, C₁₋₄-Alkoxycarbonyl, C₁₋₄-Alkylcarbonyl, Phenylcarbonyl oder Phenyl, wobei die Phenyl-Gruppen selbst mit C₁₋₄-Alkyl, C₁₋₄-Halogenalkyl, C₁₋₄-Alkoxy, C₁₋₄-Halogenalkoxy, C₁₋₄-Alkylcarbonyl, C₁₋₄-Alkoxycarbonyl, C₁₋₄-Alkylamino, Di-(C₁₋₄-alkyl)-amino, C₁₋₄-Alkylthio, C₁₋₄-Alkylsulfinyl, C₁₋₄-Alkyl-SO₂, C₁₋₄-Alkyl-S(O)₂O, C₁₋₄-Halogenalkylthio, C₁₋₄-Halogenalkylsulfinyl, C₁₋₄-Halogenalkyl-SO₂, C₁₋₄-Halogenalkyl-S(O)₂O, C₁₋₄-Alkyl-S(O)₂NH, C₁₋₄-Alkyl-S(O)₂N(C₁₋₄-alkyl)-, Halogen, Nitro oder mit Cyano substituiert sein können, darstellt;
R³⁰ Wasserstoff, C₁₋₄-Alkyl, C₃₋₄-Alkenyl, C₃₋₄-Alkinyl oder Benzyl darstellt;
h 0 oder 1 ist;
D₁ Sauerstoff, -O(CO)-, -(CO)O-, -O(CO)O-, -N(C₁₋₄-Alkyl)-O-, -O-N(C₁₋₄-Alkyl)-, Thio, Sulfinyl, Sulfonyl, -SO₂N(C₁₋₄-Alkyl)-, -N(C₁₋₄-Alkyl)SO₂-, -N(C₁₋₂-Alkoxy-C₁₋₂-alkyl)SO₂- oder -N(C₁₋₄-Alkyl)- darstellt;
D₂ eine C₁₋₆-Alkylen-, C₃₋₆-Alkenylen- oder C₃₋₆-Alkinylen-Kette darstellt, die mit Halogen oder mit D₇ ein- oder mehrfach substituiert sein kann, wobei die ungesättigten Bindungen der Kette nicht direkt an den Substituenten D₁ gebunden sind;
D₃ und D₆ jeweils unabhängig von dem anderen eine C₁₋₈-Alkyl-, C₃₋₆-Alkenyl- oder C₃₋₆-Alkinyl-Gruppe, die ein- oder mehrfach substituiert sein kann mit Halogen, Hydroxy, Amino, Formyl, Nitro, Cyano, Mercapto, Carbamoyl, C₁₋₆-Alkoxy, C₁₋₆-Alkoxycarbonyl, C₂₋₆-Alkenyl, C₂₋₆-Halogenalkenyl, C₂₋₆-Alkinyl, C₂₋₆-Halogenalkinyl, C₃₋₆-Cycloalkyl, Halogen-substituiertem C₃₋₆-Cycloalkyl, C₃₋₆-Alkenyloxy, C₃₋₆-Alkinyloxy, C₁₋₆-Halogenalkoxy, C₃₋₆-Halogenalkenyloxy, Cyano-C₁₋₆-alkoxy, C₁₋₆-Alkoxy-C₁₋₆-alkoxy, C₁₋₆-Alkoxy-C₁₋₆-alkoxy-C₁₋₆-alkoxy, C₁₋₆-Alkylthio-C₁₋₆-alkoxy, C₁₋₆-Alkylsulfinyl-C₁₋₆-alkoxy, C₁₋₆-Alkylsulfonyl-C₁₋₆-alkoxy, C₁₋₆-Alkoxy-carbonyl-C₁₋₆-alkoxy, C₁₋₆-Alkoxycarbonyl, C₁₋₆-Alkylcarbonyl, C₁₋₆-Alkylthio, C₁₋₆-Alkylsulfinyl, C₁₋₆-Alkylsulfonyl, C₁₋₆-Halogenalkylthio, C₁₋₆-Halogenalkylsulfinyl, C₁₋₆-Halogenalkyl-sulfonyl, Oxiranyl, das selbst substituiert sein kann mit C₁₋₆-Alkyl, (3-Oxetanyl)-oxy, das selbst substituiert sein kann mit C₁₋₆-Alkyl, Benzyloxy, Benzylthio, Benzylsulfinyl, Benzylsulfonyl, C₁₋₆-Alkylamino, Di-(C₁₋₆-alkyl)-amino, C₁₋₄-Alkyl-S(O)₂O, Di-(C₁₋₄-alkyl)-aminosulfonyl, Rhodano, Phenyl, Phenoxy, Phenylthio, Phenylsulfinyl oder mit Phenylsulfonyl, und wobei die Phenyl- oder Benzyl-enthaltenden Gruppen selbst mit einer oder mehreren C₁₋₆-Alkyl-, C₁₋₆-Halogenalkyl-, C₁₋₆-Alkoxy-, C₁₋₆-Halogenalkoxy-, Halogen-, Cyano-, Hydroxy- oder Nitro-Gruppen substituiert sein können, darstellen; oder
D₃ und D₆ jeweils unabhängig von dem anderen Phenyl, das ein-, zwei- oder dreifach mit C₁₋₆-Alkyl, C₁₋₆-Halogenalkyl, C₁₋₆-Alkoxy, C₁₋₆-Halogenalkoxy, Halogen, Cyano, Hydroxy oder mit Nitro substituiert sein kann, darstellen; oder
D₃ und D₆ jeweils unabhängig von dem anderen C₃₋₆-Cycloalkyl, C₁₋₆-Alkoxy- oder C₁₋₆-Alkyl-substituiertes C₃₋₆-Cycloalkyl, 3-Oxetanyl oder C₁₋₆-Alkyl-substituiertes 3-Oxetanyl darstellen; oder
D₃ und D₆ jeweils unabhängig von dem anderen ein drei- bis zehn-gliedriges monocyclisches oder kondensiertes bicyclisches Ringsystem, das aromatisch, gesättigt oder teilweise gesättigt sein kann und von 1 bis 4 Heteroatome, ausgewählt aus Stickstoff, Sauerstoff und Schwefel, enthalten kann, wobei das Ringsystem an den Substituenten D₁ oder D₄ direkt oder mit Hilfe einer C₁₋₄-Alkylen-, C₂₋₄-Alkenylen-, C₂₋₄-Alkinylen-, -N(C₁₋₄-Alkyl)-C₁₋₄-alkylen-, -S(O)-C₁₋₄-Alkylen- oder -SO₂-C₁₋₄-Alkylen-Gruppe gebunden ist, und jedes Ringsystem nicht mehr als zwei Sauerstoff-Atome und nicht mehr als zwei Schwefel-Atome enthalten kann, und das Ringsystem selbst ein-, zwei- oder dreifach mit C₁₋₆-Alkyl, C₁₋₆-Halogenalkyl, C₂₋₆-Alkenyl, C₂₋₆-Halogenalkenyl, C₂₋₆-Alkinyl, C₂₋₆-Halogenalkinyl, C₁₋₆-Alkoxy, Hydroxy, C₁₋₆-Halogenalkoxy, C₃₋₆-Alkenyloxy, C₃₋₆-Alkinyloxy, Mercapto, C₁₋₆-Alkylthio, C₁₋₆-Halogenalkylthio, C₃₋₆-Alkenylthio, C₃₋₆-Halogenalkenylthio, C₃₋₆-Alkinylthio, C₁₋₃-Alkoxy-C₁₋₃-alkylthio, C₁₋₄-Alkylcarbonyl-C₁₋₂-alkylthio, C₁₋₄-Alkoxycarbonyl-C₁₋₂-alkylthio, Cyano-C₁₋₃-alkylthio, C₁₋₆-Alkylsulfinyl, C₁₋₆-Halogenalkylsulfinyl, C₁₋₆-Alkylsulfonyl, C₁₋₆-Halogenalkylsulfonyl, Aminosulfonyl, C₁₋₂-Alkylaminosulfonyl, Di-(C₁₋₂-alkyl)-aminosulfonyl, Di-(C₁₋₄-alkyl)-amino, C₁₋₆-Carbonylamino, Halogen, Cyano, Nitro, Phenyl, Benzyloxy und/oder mit Benzylthio substituiert sein kann, wobei die Phenyl-Gruppen selbst an dem Phenyl-Ring mit C₁₋₃-Alkyl, C₁₋₃-Halogenalkyl, C₁₋₃-Alkoxy, C₁₋₃-Halogenalkoxy, Halogen, Cyano oder mit Nitro substituiert sein können, und wobei die Substituenten an dem Stickstoff in dem heterocyclischen Ring von Halogen verschieden sind, darstellen;
D₄ Sauerstoff, -O(CO)-, -(CO)O-, -O(CO)O-, -N(C₁₋₄-Alkyl)-O-, -O-N(C₁₋₄-Alkyl)-, Schwefel, Sulfinyl, Sulfonyl, -SO₂N(C₁₋₄-Alkyl)-, -N(C₁₋₄-Alkyl)SO₂-, -N(C₁₋₂-Alkoxy-C₁₋₂-alkyl)SO₂- oder -N(C₁₋₄-Alkyl)- darstellt;
D₅ eine C₁₋₆-Alkylen-, C₃₋₆-Alkenylen- oder C₃₋₆-Alkinylen-Kette, die ein- oder mehrfach mit Halogen oder mit D₈ substituiert sein kann, wobei die ungesättigten Bindungen der Kette nicht direkt an den Substituenten D₄ gebunden sind, darstellt;
D₇ und D₈ jeweils unabhängig von dem anderen Hydroxy, C₁₋₆-Alkoxy, (C₃₋₆-Cycloalkyl)-oxy, C₁₋₆-Alkoxy-C₁₋₆-alkoxy, C₁₋₆-Alkoxy-C₁₋₆-alkoxy-C₁₋₆-alkoxy oder C₁₋₆-Alkylsulfonyloxy darstellen;
und agronomisch verträgliche Salze / N-Oxide / Isomere / Enantiomere von solchen Verbindungen.

5. Verwendung nach Anspruch 1, wobei das Triketon eine Verbindung der Formel (ID) darstellt 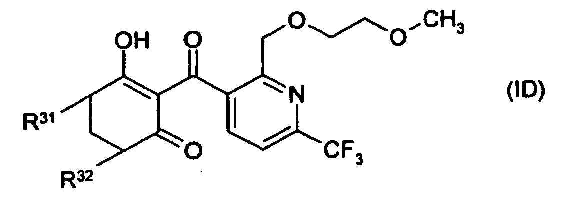 worin R³¹ und R³² beide Wasserstoff darstellen oder zusammen eine Ethylen-Brücke bilden.

6. Verwendung nach Anspruch 1, wobei das Pyrazol eine Verbindung der Formel (IE) darstellt 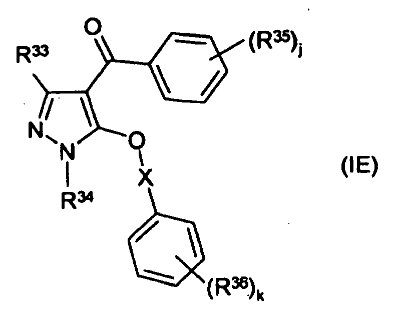
worin R³³, R³⁴, R³⁵ und R³⁶ jeweils unabhängig aus Wasserstoff, Halogen oder C₁₋₄-Alkyl ausgewählt sind;
X -SO₂- oder -CH₂CO- darstellt;
j 2 oder 3 ist; und
k null oder 1 ist.

7. Verwendung nach Anspruch 1, wobei das Pyrazol eine Verbindung der Formel (IF) darstellt 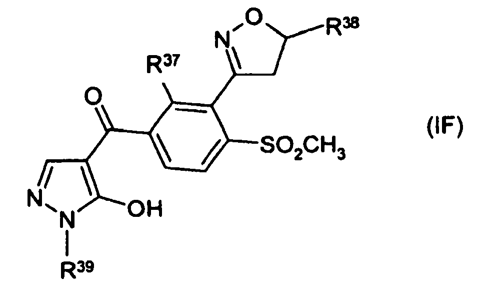 worin R³⁷ C₁₋₂-Alkyl oder Chlor darstellt; R³⁸ Wasserstoff oder C₁₋₄-Alkyl darstellt; und R³⁹ C₁₋₄-Alkyl darstellt.

8. Verwendung nach Anspruch 1, wobei der HPPD-Inhibitor Benzobicyclon darstellt.

9. Verwendung nach Anspruch 1, wobei der HPPD-Inhibitor Ketospiradox darstellt.

10. Verwendung nach einem der Ansprüche 1 bis 9, wobei der Elektrolyt aus der Gruppe, bestehend aus einer einfachen ionischen Spezies oder einem zusätzlichen Wirkbestandteil, ausgewählt ist.

11. Verwendung nach einem vorangehenden Anspruch, wobei das Verhältnis von HPPD-Inhibitor zu Elektrolyt in der Formulierung von 70 : 1 bis 1 : 5 ist.

12. Verwendung nach einem vorangehenden Anspruch, wobei die Konzentration von HPPD-Inhibitor in der Formulierung von 10 bis 600 g/l ist.

13. Verwendung nach einem vorangehenden Anspruch, wobei die Konzentration von Elektrolyt in der Formulierung von 10 bis 700 g/l ist.

## Revendications

1. Utilisation d'un électrolyte pour améliorer la stabilité d'un inhibiteur HPPD choisi parmi des isoxazoles, des tricétones, des pyrazoles, le benzobicyclon et le cétospiradox dans une formulation de concentré de suspension prémélangée aqueuse comprenant :
(i) de l'eau,
(ii) l'inhibiteur HPPD, en suspension dans l'eau, et
(iii) l'électrolyte, en solution dans l'eau.

2. Utilisation selon la revendication 1, dans laquelle l'isoxazole est un composé de la formule (IA) 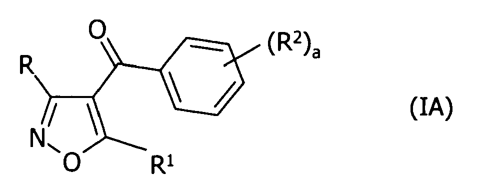
dans laquelle R est un atome d'hydrogène ou -CO₂R³;
R¹ est un groupe alkyle en C₁-C₄ ou cycloalkyle en C₃-C₆ facultativement substitué par un groupe alkyle en C₁-C₆ ;
R² est indépendamment choisi parmi un atome d'halogène, un groupe nitro, cyano, alkyle en C₁-C₄, haloalkyle en C₁-C₄, alcoxy en C₁-C₆, haloalcoxy en C₁-C₄, -(CR⁴R⁵)_{c}S(O)_{b}R⁶, -S(O)_{b}R⁶, -OSO₂R⁶ et -N(R⁷)SO₂R⁶ ; ou deux groupes R², sur des atomes de carbone adjacents du cycle phényle, peuvent avec les atomes de carbone auxquels ils sont fixés former un noyau hétérocyclique saturé ou insaturé à 5 ou 6 éléments contenant jusqu'à 3 hétéroatomes cycliques choisis parmi l'azote, l'oxygène et le soufre, lequel noyau peut être facultativement substitué par un ou plusieurs groupes choisis parmi un atome d'halogène, un groupe nitro, alkyle en C₁-C₄, alcoxy en C₁-C₄, haloalkyle en C₁-C₄, haloalcoxy en C₁-C₄ et -S(O)_{b}R⁶, on comprend qu'un atome de soufre, lorsqu'il est présent dans le noyau, peut être dans la forme d'un groupe - SO- ou -SO₂- ;
R³ est un groupe alkyle en C₁-C₄ ;
R⁴ et R⁵ sont indépendamment un atome d'hydrogène ou un groupe alkyle en C₁-C₄ ;
R⁶ est un groupe alkyle en C₁-C₄, ou phényle ou benzyle, chacun parmi le groupe phényle et benzyle portant facultativement de 1 à 5 substituants qui peuvent être identiques ou différents, choisis parmi un atome d'halogène, un groupe alkyle en C₁-C₄, alcoxy en C₁-C₄, haloalkyle en C₁-C₄, haloalcoxy en C₁-C₄, nitro et -S(O)_{b}CH₃ ;
R⁷ est un atome d'hydrogène ou un groupe alkyle en C₁-C₆ ;
a est un nombre entier de 1 à 5 ;
b est égal à 0, 1 ou 2 ; et
c est égal à 1 ou 2 (quand c est égal à 2, les groupes (CR⁴R⁵) peuvent être identiques ou différents).

3. Utilisation selon la revendication 1, dans laquelle la tricétone est un composé de la formule (IB), 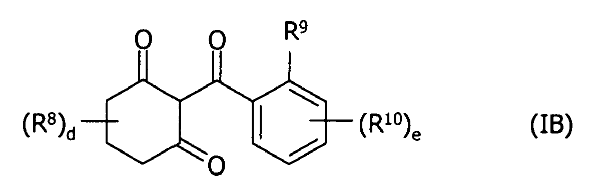
dans laquelle chaque R⁸ représente indépendamment un groupe alkyle en C₁-C₄ ou -CO₂R¹¹ ;
R⁹ représente un atome d'halogène ; un groupe alkyle ou alcoxy linéaire ou ramifié contenant jusqu'à 6 atomes de carbone qui est facultativement substitué par un ou plusieurs groupes -OR¹² ou un ou plusieurs atomes d'halogène ; ou un groupe choisi parmi un groupe nitro, cyano, -CO₂R¹³, -S(O)_{f}R¹², -O(CH₂)_{g}OR¹², -COR¹³, -NR¹³R¹⁴, -SO₂NR¹³R¹⁴, -CONR¹³R¹⁴, -CSNR¹³R¹⁴ et -OSO₂R¹⁵;
chaque R¹⁰ représente indépendamment un atome d'halogène, un groupe nitro, cyano, S(O)_{f}R¹⁶, OS(O)_{f}R¹⁶, alkyle en C₁-C₆, alcoxy en C₁-C₆, haloalkyle en C₁-C₆, haloalcoxy en C₁-C₆, carboxy, (alkyle en C₁-C₆)-carbonyloxy, (alcoxy en C₁-C₆)carbonyle, (alkyle en C₁-C₆)carbonyle, amino, (alkyle en C₁-C₆)amino, (dialkyle en C₁-C₆)amino présentant indépendamment le nombre cité d'atomes de carbone dans chaque groupe alkyle, (alkyle en C₁-C₆)carbonylamino, (alcoxy en C₁-C₆)carbonylamino, (alkyle en C₁-C₆)aminocarbonylamino, (dialkyle en C₁-C₆)aminocarbonylamino présentant indépendamment le nombre cité d'atomes de carbone dans chaque groupe alkyle, (alcoxy en C₁-C₆)carbonyloxy, (alkyle en C₁-C₆)aminocarbonyloxy, (dialkyle en C₁-C₆)carbonyloxy, phénylcarbonyle, phénylcarbonyle substitué, phénylcarbonyloxy, phénylcarbonyloxy substitué, phénylcarbonylamino, phénylcarbonylamino substitué, phénoxy ou phénoxy substitué ;
R¹¹ est un groupe alkyle en C₁-C₄ ;
R¹² représente un groupe alkyle linéaire ou ramifié contenant jusqu'à 6 atomes de carbone qui est facultativement substitué par un ou plusieurs atomes d'halogène ;
R¹³ et R¹⁴ représentent chacun indépendamment un atome d'hydrogène ; ou un groupe alkyle linéaire ou ramifié contenant jusqu'à 6 atomes de carbone qui est facultativement substitué par un ou plusieurs atomes d'halogène ;
R¹⁵ représente un groupe alkyle, alcényle ou alcynyle linéaire ou ramifié contenant jusqu'à 6 atomes de carbone facultativement substitué par un ou plusieurs atomes d'halogène ; ou un groupe cycloalkyle contenant de 3 à 6 atomes de carbone ;
R¹⁶ représente un groupe alkyle linéaire ou ramifié contenant jusqu'à 6 atomes de carbone ;
d est égal à zéro ou à un nombre entier de 1 à 6 ;
e est égal à zéro ou à un nombre entier de 1 à 4 ;
f est égal à zéro, un ou deux ; et
g est égal à un, deux ou trois ;
à l'exception de la 2-(2'-chloro-4'-méthylsulfonylbenzoyl)-1,3-cyclohexanedione.

4. Utilisation selon la revendication 1, dans laquelle la tricétone est un composé de la formule (IC) 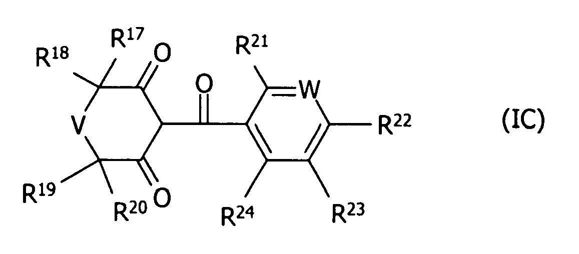
dans laquelle V est un groupe alkylène en C₁-C₄, qui peut être mono- ou poly-substitué par R²⁶; ou, lorsque R¹⁸ et R¹⁹ sont différents d'un groupe alkylène en C₁-C₃, V peut de plus être un groupe carbonyle, un atome d'oxygène ou -NR²⁷- ;
W est CR²⁸ ou N(O)_{g} ;
R¹⁷, R¹⁸, R¹⁹ et R²⁰ sont indépendamment un atome d'hydrogène, un groupe alkyle en C₁-C₄, phényle, alcoxy en C₁-C₄, un atome d'hydrogène, un groupe hydroxy, cyano, hydroxycarbonyle ou (alcoxy en C₁-C₄)carbonyle ; ou R¹⁸ et R¹⁹ sont ensemble un groupe alkylène en C₂-C₃, qui peut être mono- ou poly-substitué par R²⁵ ;
R²¹ est un atome d'hydrogène, un groupe alkyle en C₁-C₆, haloalkyle en C₁-C₆, alcényle en C₂-C₆, haloalcényle en C₂-C₆, vinyle (alcoxycarbonyle en C₁-C₂)- ou phényle-substitué, alcynyle en C₂-C₆, haloalcynyle en C₂-C₆, éthynyle triméthylsilyle-, hydroxy-, (alcoxy en C₁-C₆)-, (alcoxycarbonyle en C-) ou phényle-substitué, allényle en C₃-C₆, cycloalkyle en C₃-C₆, cycloalkyle en C₃-C₆ halo- ou (alcoxyméthyle en C₁-C₃)-substitué, alcoxy en C₁-C₆, alcényloxy en C₃-C₆, alcynyloxy en C₃-C₆, haloalcoxy en C₁-C₆, haloalcényloxy en C₃-C₆, cyano-(alcoxy en C₁-C₄), (alcoxy en C₁-C₄)-(alcoxy en C₁-C₄), (alkylthio en C₁-C₄)-(alcoxy en C₁-C₄), (alkyle en C₁-C₄)sulfinyl-(alcoxy en C₁-C₄), (alkyle en C₁-C₄)sulfonyl-(alcoxy en C₁-C₄), (alcoxy en C₁-C₄)carbonyl-(alcoxy en C₁-C₄), alkylthio en C₁-C₆, alkylsulfinyle en C₁-C₆, alkylsulfonyle en C₁-C₆, haloalkylthio en C₁-C₆, haloalkylsulfinyle en C₁-C₆, haloalkylsulfonyle en C₁-C₆, (alcoxy en C₁-C₄)carbonyl-(alkylthio en C₁-C₄), (alcoxy en C₁-C₄)carbonyl-(alkylsulfinyle en C₁-C₄), (alcoxy en C₁-C₄)carbonyl-(alkylsulfonyle en C₁-C₄), alkylamino en C₁-C₆, di-(alkyle en C₁-C₆)amino, (alcoxy en C₁-C₃)-(alkylamino en C₁-C₃), (alcoxy en C₁-C₃)-(alkyle en C₁-C₃)-N(alkyle en C₁-C₃), alkylaminosulfonyle en C₁-C₆, di-(alkyle en C₁-C₆)aminosulfonyle, (alkyle en C₁-C₄)sulfonyloxy, haloalkylsulfonyloxy en C₁-C₄, alkylsulfonylamino en C₁-C₄, (alkyle en C₁-C₄)sulfonyl-N(alkyle en C₁-C₄), cyano, carbamoyle, (alcoxy en C₁-C₄)carbonyle, formyle, un atome d'halogène, un groupe rhodano, amino, hydroxy-(alkyle en C₁-C₄), (alcoxy en C₁-C₄)-(alkyle en C₁-C₄), (alkylthio en C₁-C₄)-(alkyle en C₁-C₄), (alkylsulfinyle en C₁-C₄)-(alkyle en C₁-C₄), (alkylsulfonyle en C₁-C₄)-(alkyle en C₁-C₄), cyano-(alkyle en C₁-C₄), (alkyle en C₁-C₆)carbonyloxy-(alkyle en C₁-C₄), (alcoxy en C₁-C₄)carbonyl-(alkyle en C₁-C₄), (alcoxy en C₁-C₄)carbonyloxy-(alkyle en C₁-C₄), rhodano-(alkyle en C₁-C₄), phényl-(alkyle en C₁-C₄), phénoxy-(alkyle en C₁-C₄), benzyloxy-(alkyle en C₁-C₄), benzoyloxy-(alkyle en C₁-C₄), (2-oxyranyl)-(alkyle en C₁-C₄), (alkyle en C₁-C₄)amino-(alkyle en C₁-C₄), di-(alkyle en C₁-C₄)amino-(alkyle en C₁-C₄), (alkyle en C₁-C₁₂)thiocarbonyl-(alkyle en C₁-C₄) ou formyl-(alkyle en C₁-C₄) ou benzylthio, benzylsulfinyle, benzylsulfonyle, benzyloxy, benzyle, phényle, phénoxy, phénylthio, phénylsulfinyle ou phénylsulfonyle, dans laquelle les groupes contenant un groupe phényle peuvent eux-mêmes être substitués par un groupe alkyle en C₁-C₃, haloalkyle en C₁-C₃, alcoxy en C₁-C₃, haloalcoxy en C₁-C₃, un atome d'halogène, un groupe cyano ou par un groupe nitro ; ou
R²¹ est un système de noyau monocyclique à de trois à dix éléments ou bicyclique condensé, lequel peut être aromatique, saturé ou partiellement saturé et peut contenir de 1 à 4 hétéroatomes choisis parmi l'azote, l'oxygène et le soufre, dans lequel le système de noyau est lié au noyau aromatique contenant le groupe W au moyen d'un pont alkylène en C₁-C₄, alcénylène en C₂-C₄ ou alcynylène en C₂-C₄ qui peut être interrompu par un atome d'oxygène, un groupe -N(alkyle en C₁-C₄)-, un atome de soufre, un groupe sulfinyle, sulfonyle ou par un groupe carbonyle, et chaque système de noyau peut contenir au plus deux atomes d'oxygène et au plus deux atomes de soufre, et le système de noyau peut lui-même être mono-, di- ou trisubstitué par un groupe alkyle en C₁-C₆, haloalkyle en C₁-C₆, alcényle en C₂-C₆, haloalcényle en C₂-C₆, alcynyle en C₂-C₆, haloalcynyle en C₂-C₆, alcoxy en C₁-C₆, haloalcoxy en C₁-C₆, alcényloxy en C₃-C₆, alcynyloxy en C₃-C₆, hydroxy, mercapto, alkylthio en C₁-C₆, haloalkylthio en C₁-C₆, alcénylthio en C₃-C₆, haloalcénylthio en C₃-C₆, alcynylthio en C₃-C₆, (alcoxy en C₁-C₄)-(alkylthio en C₁-C₃), (alkyle en C₁-C₄)carbonyl-(alkylthio en C₁-C₃), (alcoxy en C₁-C₄)carbonyl-(alkylthio en C₁-C₃), cyano-(alkylthio en C₁-C₃), alkylsulfinyle en C₁-C₆, haloalkylsulfinyle en C₁-C₆, alkylsulfonyle en C₁-C₆, haloalkylsulfonyle en C₁-C₆, aminosulfonyle, alkylaminosulfonyle en C₁-C₄, di(alkyle en Cul-C₄)aminosulfonyle, di(alkyle en C₁C₄)amino, un atome d'halogène, un groupe cyano, nitro, phényle ou par un groupe benzylthio, dans lequel les groupes phényle et benzylthio peuvent eux-mêmes être substitués sur le noyau phényle par un groupe alkyle en C₁-C₃, haloalkyle en C₁-C₃, alcoxy en C₁-C₃, haloalcoxy en C₁-C₃, un atome d'halogène, un groupe cyano ou un groupe nitro, et dans lequel les substituants sur l'azote dans le noyau hétérocyclique sont différents d'un atome d'halogène ;
ou
R²¹ est le groupe -D₁-D₃ ou le groupe -D₂-D₁-D₃ ;
R²² est un atome d'hydrogène, un groupe alkyle en C₁-C₆, haloalkyle en C₁-C₆, alcényle en C₂-C₆, haloalcényle en C₂-C₆, alcynyle en C₂-C₆, haloalcynyle en C₂-C₆, cycloalkyle en C₃-C₆, alcoxy en C₁-C₆, haloalcoxy en C₁-C₆, alkylthio en C₁-C₆, alkylsulfinyle en C₁-C₆, alkylsulfonyle en C₁-C₆, haloalkylthio en C₁-C₆, haloalkylsulfinyle en C₁-C₆, haloalkylsulfonyle en C₁-C₆, alkylsulfonyloxy en C₁-C₆, hydroxy, mercapto, amino, alkylamino en C₁-C₆, di(alkyle en C₁-C₆)amino, (alkyle en C₁-C₄)sulfonylamino, (alkyle en C₁-C₄)sulfonyl-N(alkyle en C₁-C₄)-, (alkyle en C₁-C₆)aminosulfonyle, di(alkyle en C₁-C₆)aminosulfonyle, cyano, un atome d'halogène, un groupe (alcoxy en C₁C₄)-(alkyle en C₁-C₄), (alkylthio en C₁-C₄)-(alkyle en C₁-C₄), (alkylsulfinyle en C₁-C₄)-(alkyle en C₁-C₄), (alkylsulfonyle en C₁-C₄)-(alkyle en C₁-C₄), triazolyle, phényle, phénylthio, phénylsulfinyle, phénylsulfonyle ou phénoxy, dans lequel les groupes contenant un groupe phényle peuvent être substitués par un groupe alkyle en C₁-C₃, haloalkyle en C₁-C₃, alcoxy en C₁-C₃, haloalcoxy en C₁-C₃, un atome d'halogène, un groupe cyano ou par un groupe nitro ;
R²³ est un atome d'hydrogène, un groupe alkyle en C₁-C₆, hydroxy, alcoxy en C₁-C₆, haloalcoxy en C₁-C₆, alcényloxy en C₃-C₆, haloalcényloxy en C₃-C₆, alcynyloxy en C₃-C₆, alkylcarbonyloxy en C₁-C₄, alkylsulfonyloxy en C₁-C₄, phénylsulfonyloxy, alkylthio en C₁-C₄, alkylsulfinyle en C₁-C₄, alkylsulfonyle en C₁-C₄, alkylamino en C₁-C₄, di(alkyle en C₁-C₄)amino, alcoxycarbonyle en C₁-C₄, haloalkyle en C₁-C₄, formyle, cyano, un atome d'halogène, un groupe phényle ou phénoxy, dans lequel les groupes contenant un groupe phényle peuvent eux-mêmes être substitués par un groupe alkyle en C₁-C₃, haloalkyle en C₁-C₃, alcoxy en C₁-C₃, haloalcoxy en C₁-C₃, un atome d'halogène, un groupe cyano ou par un groupe nitro ; ou R²³ est un système de noyau monocyclique à de trois à dix éléments ou, avec R²⁵ ou R²⁷, bicyclique condensé qui peut contenir de 1 à 4 hétéroatomes choisis parmi l'azote, l'oxygène et le soufre, dans lequel lorsque le système de noyau n'est pas condensé, il est lié au noyau aromatique contenant W soit directement soit au moyen d'un pont alkylène en C₁-C₄, alcénylène en C₂-C₄ ou alcynylène en C₂-C₄ qui peut être interrompu par un atome d'oxygène, un groupe -N(alkyle en C₁-C₄)-, un atome de soufre, un groupe sulfinyle, sulfonyle ou par un groupe carbonyle et le système de noyau peut contenir au plus deux atomes d'oxygène et au plus deux atomes de soufre, et le système de noyau peut lui-même être mono-, di- ou tri-substitué par un groupe alkyle en C₁-C₆, haloalkyle en C₁-C₆, alcényle en C₂-C₆, haloalcényle en C₂-C₆, alcynyle en C₂-C₆, haloalcynyle en C₂-C₆, alcoxy en C₁-C₆, haloalcoxy en C₁-C₆, alcényloxy en C₃-C₆, alcynyloxy en C₃-C₆, alkylthio en C₁-C₆, haloalkylthio en C₁-C₆, alcénylthio en C₃-C₆, haloalcénylthio en C₃-C₆, alcynylthio en C₃-C₆, (alcoxy en C₁-C₄)-(alkylthio en C₁-C₂), (alkyle en C₁-C₄)carbonyl-(alkylthio en C₁-C₂), (alcoxycarbonyle en C₁-C₄)-(alkylthio en C₁-C₂), cyano-(alkylthio en C₁-C₄), alkylsulfinyle en C₁-C₆, haloalkylsulfinyle en C₁-C₆, alkylsulfonyle en C₁-C₆, haloalkylsulfonyle en C₁-C₆, aminosulfonyle, (alkyle en C₁-C₄)aminosulfonyle, di(alkyle en C₁-C₄)aminosulfonyle, amino, alkylamino en C₁-C₄, di(alkyle en C₁-C₄)amino, un atome d'halogène, un groupe cyano, nitro, phényle et par/ou benzylthio, dans lequel les groupes phényle et benzylthio peuvent eux-mêmes être substitués sur le noyau phényle par un groupe alkyle en C₁-C₃, haloalkyle en C₁-C₃, alcoxy en C₁-C₃, haloalcoxy en C₁-C₃, un atome d'halogène, un groupe cyano ou par un groupe nitro, et dans lequel les substituants sur l'atome d'azote dans le noyau hétérocyclique sont différents d'un atome d'halogène ;
R²⁴ est un atome d'hydrogène, un groupe alkyle en C₁-C₆, haloalkyle en C₁-C₆, alcényle en C₂-C₆, haloalcényle en C₂-C₆, alcynyle en C₂-C₆, haloalcynyle en C₂-C₆, cycloalkyle en C₃-C₆, alcoxy en C₁-C₆, haloalcoxy en C₁-C₆, alkylthio en C₁-C₆, alkylsulfinyle en C₁-C₆, alkylsulfonyle en C₁-C₆, haloalkylthio en C₁-C₆, haloalkylsulfinyle en C₁-C₆, haloalkylsulfonyle en C₁-C₆, amino, alkylamino en C₁-C₆, di(alkyle en C₁-C₆)amino, (alkylsulfonyle en C₁-C₄)-N(alkyle en C₁-C₄)-, alkylaminosulfonyle en C₁-C₆, di(alkyle en C₁-C₆)aminosulfonyle, cyano, un atome d'halogène, (alcoxy en C₁-C₄)-(alkyle en C₁-C₄), (alkylthio en C₁-C₄)-(alkyle en C₁-C₄), (alkylsulfinyle en C₁-C₄)-(alkyle en C₁-C₄), (alkylsulfonyle en C₁-C₄)-(alkyle en C₁-C₄), phényle, phénylthio, phénylsulfinyle, phénylsulfonyle ou phénoxy, dans lequel les groupes phényle peuvent eux-mêmes être substitués par un groupe alkyle en C₁-C₃, haloalkyle en C₁-C₃, alcoxy en C₁-C₃, haloalcoxy en C₁-C₃, un atome d'halogène, un groupe cyano ou par un groupe nitro ;
R²⁵ et R²⁶ sont chacun indépendamment un atome d'hydrogène, un groupe alkyle en C₁-C₄, phényle, alcoxy en C₁-C₄, un atome d'halogène, un groupe hydroxy, cyano, hydroxycarbonyle ou alcoxycarbonyle en C₁-C₄ ;
R²⁷ est un groupe alkyle en C₁-C₄, alcoxycarbonyle ou alkylcarbonyle en C₁-C₄ ;
R²⁸ est un atome d'hydrogène, un groupe alkyle en C₁-C₆, hydroxy, alcoxy en C₁-C₆, haloalcoxy en C₁-C₆, alcényloxy en C₃-C₆, haloalcényloxy en C₃-C₆, alcynyloxy en C₃-C₆, alkylcarbonyloxy en C₁-C₄, alkylsulfonyloxy en C₁-C₄, phénylsulfonyloxy, alkylthio en C₁-C₆, alkylsulfinyle en C₁-C₆, alkylsulfonyle en C₁-C₆, alkylamino en C₁-C₆, di(alkyle en C₁-C₆)amino, (alcoxy en C₁-C₃)-(alkylamino en C₁-C₃), (alcoxy en C₁-C₃)-(alkyle en C₁-C₃)-N(alkyle en C₁-C₃)-, alcoxycarbonyle en C₁-C₄, haloalkyle en C₁-C₆, formyle, cyano, un atome d'halogène, un groupe phényle ou phénoxy, dans lequel les groupes contenant un groupe phényle peuvent eux-mêmes être substitués par un groupe alkyle en C₁-C₃, haloalkyle en C₁-C₃, alcoxy en C₁-C₃, haloalcoxy en C₁-C₃, un atome d'halogène, un groupe cyano ou par un groupe nitro ;
ou R²⁸ est un système de noyau monocyclique à de trois à dix éléments ou, avec R²¹ ou R²², bicyclique condensé qui peut être interrompu de une à trois fois par des substituants hétérocycliques choisis parmi un atome d'oxygène, de soufre, un groupe S(O), SO₂, N(R²⁹), carbonyle et C(=NOR³⁰), et dans lequel, lorsque le système de noyau n'est pas condensé, il est lié à l'atome de carbone du substituant W, soit directement soit au moyen d'un pont alkylène en C₁-C₄, alcénylène en C₂-C₄ ou alcynylène en C₂-C₄ qui peut être interrompu par un atome d'oxygène, un groupe -N(alkyle en C₁-C₄)-, un atome de soufre, un groupe sulfinyle ou par un groupe sulfonyle et le système de noyau peut contenir au plus deux atomes d'oxygène et au plus deux atomes de soufre, et le système de noyau peut lui-même être mono-, di- ou tri-substitué par un groupe alkyle en C₁-C₆, haloalkyle en C₁-C₆, alcényle en C₂-C₆, haloalcényle en C₂-C₆, alcynyle en C₂-C₆, haloalcynyle en C₂-C₆, alcoxy en C₁-C₆, haloalcoxy en C₁-C₆, alcényloxy en C₃-C₆, alcynyloxy en C₃-C₆, alkylthio en C₁-C₆, haloalkylthio en C₁-C₆, alcénylthio en C₃-C₆, haloalcénylthio en C₃-C₆, alcynylthio en C₃-C₆, (alcoxy en C₁-C₄)-(alkylthio en C₁-C₂), (alkylcarbonyle en C₁-C₄)-(alkylthio en C₁-C₂), (alcoxycarbonyle en C₁-C₄)-(alkylthio en C₁-C₂), cyano-(alkylthio en C₁-C₄), alkylsulfinyle en C₁-C₆, haloalkylsulfinyle en C₁-C₆, alkylsulfonyle en C₁-C₆, haloalkylsulfonyle en C₁-C₆, aminosulfonyle, alkylaminosulfonyle en C₁-C₄, di(alkyle en C₁-C₄)aminosulfonyle, di(alkyle en C₁-C₄)amino, un atome d'halogène, un groupe cyano, nitro, phényle, benzyloxy et/ou par un groupe benzylthio, et dans lequel les groupes contenant un groupe phényle peuvent eux-mêmes être substitués sur le noyau phényle par un groupe alkyle en C₁-C₃, haloalkyle en C₁-C₃, alcoxy en C₁-C₃, haloalcoxy en C₁-C₃, un atome d'halogène, un groupe cyano ou par un groupe nitro, et dans lequel les substituants sur l'azote dans le noyau hétérocyclique sont différents d'un atome d'halogène ;
ou R²⁸ est le groupe -D₄-D₆ ou le groupe -D₅-D₄-D₆ ;
R²⁹ est un atome d'hydrogène, un groupe alkyle en C₁-C₄, (alkylthio en C₁-C₄)-(alkylcarbonyle en C₁-C₄), (alkylsulfinyle en C₁-C₄)-(alkylcarbonyle en C₁-C₄), (alkylsulfonyle en C₁-C₄)-(alkylcarbonyle en C₁-C₄), alcoxycarbonyle en C₁-C₄, alkylcarbonyle en C₁-C₄, phénylcarbonyle ou phényle, dans lequel les groupes phényle peuvent eux-mêmes être substitués par un groupe alkyle en C₁-C₄, haloalkyle en C₁-C₄, alcoxy en C₁-C₄, haloalcoxy en C₁-C₄, alkylcarbonyle en C₁-C₄, alcoxycarbonyle en C₁-C₄, alkylamino en C₁-C₄, di(alkyle en C₁-C₄)amino, alkylthio en C₁-C₄, alkylsulfinyle en C₁-C₄, (alkyle en C₁-C₄)-SO₂, (alkyle en C₁-C₄)-S(O)₂O, haloalkylthio en C₁-C₄, haloalkylsulfinyle en C₁-C₄, (haloalkyle en C₁-C₄)-SO₂, (haloalkyle en C₁-C₄)-S(O)₂O, (alkyle en C₁-C₄)-S(O)₂NH, (alkyle en C₁-C₄)-S(O)₂N(alkyle en C₁-C₄)-, un atome d'halogène, un groupe nitro ou par un groupe cyano ;
R³⁰ est un atome d'hydrogène, un groupe alkyle en C₁-C₄, alcényle en C₃-C₄, alcynyle en C₃-C₄ ou benzyle ; h est égal à 0 ou à 1 ;
D₁ est un atome d'oxygène, -O(CO)-, -(CO)O-, -O(CO)O-, -N(alkyle en C₁-C₄)-O-, -O-N(alkyle en C₁-C₄)-, thio, sulfinyle, sulfonyle, -SO₂N(alkyle en C₁-C₄)-, -N(alkyle en C₁-C₄)SO₂-, -N(alcoxy en C₁-C₂)-(alkyle en C₁-C₂)SO₂-ou -N(alkyle en C₁-C₄)- ;
D₂ est une chaîne alkylène en C₁-C₆, alcénylène en C₃-C₆ ou alcynylène en C₃-C₆, laquelle peut être mono- ou polysubstituée par un atome d'halogène ou par D₇, les liaisons insaturées de la chaîne n'étant pas directement liées au substituant D₁ ;
D₃ et D₆ sont chacun indépendamment l'un de l'autre un groupe alkyle en C₁-C₈, alcényle en C₃-C₆ ou alcynyle en C₃-C₆, lequel peut être mono- ou polysubstitué par un atome d'halogène, un groupe hydroxy, amino, formyle, nitro, cyano, mercapto, carbamoyle, alcoxy en C₁-C₆, alcoxycarbonyle en C₁-C₆, alcényle en C₂-C₆, haloalcényle en C₂-C₆, alcynyle en C₂-C₆, haloalcynyle en C₂-C₆, cycloalkyle en C₃-C₆, cycloalkyle en C₃-C₆ halo-substitué, alcényloxy en C₃-C₆, alcynyloxy en C₃-C₆, haloalcoxy en C₁-C₆, haloalcényloxy en C₃-C₆, cyano-(alcoxy en C₁-C₆), (alcoxy en C₁-C₆)-(alcoxy en C₁-C₆), (alcoxy en C₁-C₆)-(alcoxy en C₁-C₆)-(alcoxy en C₁-C₆), (alkylthio en C₁-C₆)-(alcoxy en C₁-C₆), (alkylsulfinyle en C₁-C₆)-(alcoxy en C₁-C₆), (alkylsulfonyle en C₁-C₆)-(alcoxy en C₁-C₆), (alcoxy en C₁-C₆)-carbonyl-(alcoxy en C₁-C₆), alcoxycarbonyle en C₁-C₆, alkylcarbonyle en C₁-C₆, alkylthio en C₁-C₆, alkylsulfynyle en C₁-C₆, alkylsulfonyle en C₁-C₆, haloalkylthio en C₁-C₆, haloalkylsulfinyle en C₁-C₆, haloalkylsulfonyle en C₁-C₆, oxyranyle qui peut lui-même être substitué par un groupe alkyle en C₁-C₆, (3-oxétanyl)-oxy qui peut lui-même être substitué par un groupe alkyle en C₁-C₆, benzyloxy, benzylthio, benrylsulfinyle, benzylsulfonyle, alkylamino en C₁-C₆, di-(alkyle en C₁-C₆)amino, (alkyle en C₁-C₄)-S(O)₂O, di(alkyle en C₁-C₄)aminosulfonyle, rhodano, phényle, phénoxy, phénylthio, phénylsulfinyle ou par un groupe phénylsulfonyle, et dans lequel les groupes contenant un groupe phényle ou benzyle peuvent eux-mêmes être substitués par un ou plusieurs groupes alkyle en C₁-C₆, haloalkyle en C₁-C₆, alcoxy en C₁-C₆, haloalcoxy en C₁-C₆, un atome d'halogène, un groupe cyano, un groupe hydroxy ou nitro ; ou
D₃ et D₆ sont chacun indépendamment l'un de l'autre un groupe phényle, qui peut être mono- ou poly-substitué par un groupe alkyle en C₁-C₆, haloalkyle en C₁-C₆, alcoxy en C₁-C₆, haloalcoxy en C₁-C₆, un atome d'halogène, un groupe cyano, hydroxy ou par un groupe nitro ; ou
D₃ et D₆ sont chacun indépendamment l'un de l'autre un groupe cycloalkyle en C₃-C₆, cycloalkyle en C₃-C₆ (alcoxy en C₁-C₆)- ou (alkyle en C₁-C₆)-substitué, 3-oxétanyle ou 3-oxétanyle (alkyle en C₁-C₆)-substitué ; ou
D₃ et D₆ sont chacun indépendamment l'un de l'autre un système de noyau monocyclique à de trois à dix éléments ou bicyclique condensé, qui peut être aromatique, saturé ou partiellement saturé et peut contenir de 1 à 4 hétéroatomes choisis parmi l'azote, l'oxygène et le soufre, dans lequel le système de noyau est lié au substituant D₁ ou D₄ directement ou au moyen d'un groupe alkylène en C₁-C₄, alcénylène en C₂-C₄, alcynylène en C₂-C₄, -N(alkyle en C₁-C₄)-(alkylène en C₁-C₄), -S(O)-(alkylène en C₁-C₄) ou -SO₂-(alkylène en C₁-C₄), et chaque système de noyau peut contenir au plus deux atomes d'oxygène et au plus deux atomes de soufre, et le système de noyau peut lui-même être mono-, di- ou tri-substitué par un groupe alkyle en C₁-C₆, haloalkyle en C₁-C₆, alcényle en C₂-C₆, haloalcényle en C₂-C₆, alcynyle en C₂-C₆, haloalcynyle en C₂-C₆, alcoxy en C₁-C₆, hydroxy, haloalcoxy en C₁-C₆, alcényloxy en C₃-C₆, alcynyloxy en C₃-C₆, mercapto, alkylthio en C₁-C₆, haloalkylthio en C₁-C₆, alcénylthio en C₃-C₆, haloalcénylthio en C₃-C₆, alcynylthio en C₃-C₆, (alcoxy en C₁-C₃)-(alkylthio en C₁-C₃), (alkylcarbonyle en C₁-C₄)-(alkylthio en C₁-C₂), (alcoxycarbonyle en C₁-C₄)-(alkylthio en C₁-C₂), cyano-(alkylthio en C₁-C₃), alkylsulfinyle en C₁-C₆, haloalkylsulfinyle en C₁-C₆, alkylsulfonyle en C₁-C₆, haloalkylsulfonyle en C₁-C₆, aminosulfonyle, alkylaminosulfonyle en C₁-C₂, di-(alkyle en C₁-C₂)aminosulfonyle, di-(alkyle en C₁-C₄)amino, carbonylamino en C₁-C₆, un atome d'halogène, un groupe cyano, nitro, phényle, benzyloxy et/ou par un groupe benzylthio, dans lequel les groupes phényle peuvent eux-mêmes être substitués sur le noyau phényle par un groupe alkyle en C₁-C₃, haloalkyle en C₁-C₃, alcoxy en C₁-C₃, haloalcoxy en C₁-C₃, un atome d'halogène, un groupe cyano ou par un groupe nitro, et dans lequel les substituants sur l'azote dans le noyau hétérocyclique sont différents d'un atome d'halogène ;
D₄ est un atome d'oxygène, -O(CO)-, -(CO)O-, -O(CO)O-, -N(alkyle en C₁-C₄)-O-, -O-N(alkyle en C₁-C₄)-, un atome de soufre, un groupe sulfinyle, sulfonyle, -SO₂N(alkyle en C₁-C₄)-, -N(alkyle en C₁-C₄)SO₂-, -N(alcoxy en C₁-C₂)-(alkyle en C₁-C₂)SO₂- ou -N(alkyle en C₁-C₄)- ;
D₅ est une chaîne alkylène en C₁-C₆, alcénylène en C₃-C₆ ou alcynylène en C₃-C₆, laquelle peut être mono- ou polysubstituée par un atome d'halogène ou par D₈, les liaisons insaturées de la chaîne n'étant pas directement liées au substituant D₄ ;
D₇ et D₈ sont chacun indépendamment l'un de l'autre un groupe hydroxy, alcoxy en C₁-C₆, (cycloalkyle en C₃-C₆)oxy, (alcoxy en C₁-C₆)-(alcoxy en C₁-C₆), (alcoxy en C₁-C₆)-(alcoxy en C₁-C₆)-(alcoxy en C₁-C₆) ou alkylsulfonyloxy en C₁-C₆ ;
et des sels/N-oxydes/isomères/énantiomères de tels composés agronomiquement acceptables.

5. Utilisation selon la revendication 1, dans laquelle la tricétone est un composé de la formule (ID) 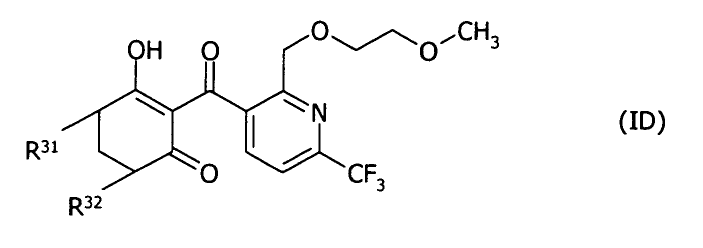 dans laquelle R³¹ et R³² sont tous deux un atome d'hydrogène ou forment ensemble un pont éthylène.

6. Utilisation selon la revendication 1, dans laquelle le pyrazole est un composé de formule (IE) 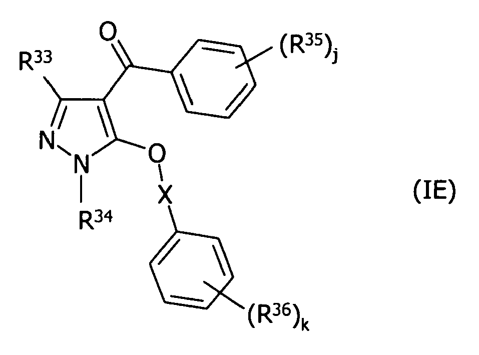
dans laquelle R³³, R³⁴, R³⁵ et R³⁶ sont chacun indépendamment un atome d'hydrogène, d'halogène ou un groupe alkyle en C₁-C₄ ;
X est -SO₂- ou -CH₂CO- ;
j est égal à 2 ou à 3 ; et
k est égal à zéro ou 1.

7. Utilisation selon la revendication 1, dans laquelle le pyrazole est un composé de la formule (IF) 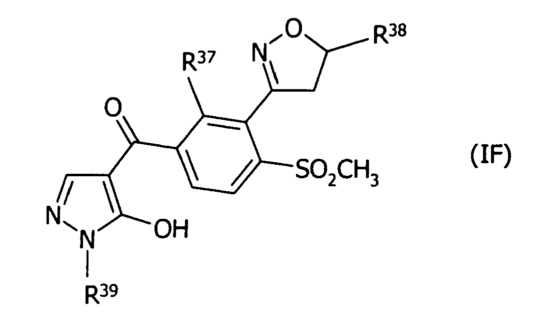 dans laquelle R³⁷ est un groupe alkyle en C₁-C₂ ou chloro ; R³⁸ est un atome d'hydrogène ou un groupe alkyle en C₁-C₄ ; et R³⁹ est un groupe alkyle en C₁-C₄.

8. Utilisation selon la revendication 1, dans laquelle l'inhibiteur HPPD est le benzobicyclon.

9. Utilisation selon la revendication 1, dans laquelle l'inhibiteur HPPD est le cétospiradox.

10. Utilisation selon l'une quelconque des revendications 1 à 9, dans laquelle l'électrolyte est choisi parmi des espèces ioniques simples ou un ingrédient actif supplémentaire.

11. Utilisation selon l'une quelconque des revendications précédentes, dans laquelle le rapport de l'inhibiteur HPPD à l'électrolyte est dans la formulation de 70:1 à 1:5.

12. Utilisation selon l'une quelconque des revendications précédentes, dans laquelle la concentration de l'inhibiteur HPPD dans la formulation est de 10 à 600 g/l.

13. Utilisation selon l'une quelconque des revendications précédentes, dans laquelle la concentration de l'électrolyte dans la formulation est de 10 à 700 g/l.
